# EUROPÄISCHE PATENTSCHRIFT

(11) **EP 2 667 101 B1**
(45) Veröffentlichungstag und Bekanntmachung des Hinweises auf die Patenterteilung: **01.03.2017**
(21) Anmeldenummer: 13167877.3
(22) Anmeldetag: 15.05.2013
(51) Int. Cl.: F24D 3/14, E04F 13/14, E04B 1/80, E04B 9/04, E04C 2/52, F24D 3/16, E04C 2/04, E04F 13/04, E04F 13/08, E04F 13/12

(54) **Thermisch leitende Platte als thermoaktives Bauelement**
Thermally conductive panel as a thermally active component
Plaque conductrice de chaleur comme élément de construction thermoactif

(30) Priorität: 23.05.2012 DE 102012208674
(43) Veröffentlichungstag der Anmeldung: 27.11.2013
(73) Patentinhaber: STO SE & Co. KGaA, 79780 Stühlingen (DE)
(72) Erfinder: Gerhardt, Harald, 14625 Dallgow-Döberitz (DE); Bauer, Martin, 89420 Höchstädt a. d. Donau (DE); Hüpping, Martin, 78247 Hilzingen (DE)
(74) Vertreter: Gottschalk, Matthias

(56) Entgegenhaltungen:
- WO-A1-03/064931
- DE-A1- 2 621 938
- DE-A1- 3 211 970
- NL-C2- 1 034 848
- US-A- 3 948 614

## Beschreibung

Die vorliegende Erfindung betrifft thermoaktive Bauelemente, und insbesondere eine thermisch leitende Platte für eine vorgesetzte Innenraumverkleidung, ein thermoaktives Deckenverkleidungssystem, ein Verfahren zur Herstellung einer thermisch leitenden Platte und die Verwendung einer thermisch leitenden Platte zum wenigstens teilweisen Umhüllen eines Innenraums.

Im Bereich von Gebäuden werden vorgesetzte Innenraumverkleidungen eingesetzt, die den Raum zumindest teilwiese umschließen, wobei die Anforderungen an die Nutzbarkeit des Raumes insbesondere auch einhergehen mit Anforderungen an die thermische Behaglichkeit für den Nutzer während des Aufenthalts in dem Raum. Neben separat eingesetzten Heiz- und Kühlflächen, beispielsweise Heizkörpern, werden auch die Elemente der Innenraumverkleidung dazu verwendet, dem Raum Wärme zuzuführen, bzw. im Fall von gewünschter Kühlung auch Wärme abzuführen. Die DE 103 61 421 A1 beschreibt beispielsweise ein Raumbegrenzungselement, das eine Platte aus schlecht wärmeleitendem Material aufweist, bei dem auf der dem Raum abgewandten Seite von einem Heiz- oder Kühlmedium durchströmbare rohrförmige Leitungen vorgesehen sind. Die Platte ist auf der dem Raum abgewandten Seite ganzflächig mit einer mit den Leitungen in Berührung stehenden Metallfolie überzogen. Um die Wärmeleitung zwischen den Leitungen und dem Raum zu verbessern, sind in der Platte Löcher vorgesehen, um eine Metallfolie auf der dem Raum zugewandten Seite durch eine durch die Löcher eine Metallfolie auf der dem Raum zugewandten Seite durch eine durch die Löcher in der Platte hindurchgehende Metallverbindung wärmeleitend miteinander zu koppeln. Die Metallverbindung ist beispielsweise ebenfalls als Metallfolie ausgebildet. Mit gestiegenen Anforderungen an den Komfort gehen jedoch auch erhöhte Anforderungen hinsichtlich der abzuführenden Wärme, bzw. auch der zuzuführenden Wärme einher.

Die NL 1034848 beschreibt ein Wandpaneel, bei dem Aluminiumfolienstreifen zwischen einer ersten Oberfläche und einer zweiten Oberfläche angeordnet sind, wobei eine Aluminiumfolie auch auf den beiden Deckschichten vorgesehen ist und ein Metallrohr dem Transport eines Kühl/Heizmediums dient. Die DE 26 21 938 befasst sich mit Fußbodenheizungen und beschreibt eine tragende Estrich-Schicht, bei der beispielsweise ein Gitterwerk als Einlage vorgesehen ist, um den Wärmetransport zu unterstützen. Die DE 32 11 970 A1 beschreibt ebenfalls eine Fußbodenheizung und erwähnt das Vorsehen von wärmeleitenden Elementen in einer oberen Schicht. Die US 3,948,614 beschreibt einen Panelaufbau, bei dem zwischen zwei Metalldeckflächen Omega-Profile eingesetzt sind, mit denen die beiden Deckflächen verbunden werden, wobei zwischen den beiden Deckschichten im Bereich der Omega-Profilabschnitte ein Schaumwerkstoff vorgesehen ist. Die WO 03/064931 A1 beschreibt ein thermoaktives Wand- und Deckenelement mit Phasenwechselmaterial in einem abgeschlossenen Behälter.

Es besteht daher ein Bedarf für eine vorgesetzte Innenraumverkleidung, die eine verbesserte Wärmetransportfähigkeit zur Verfügung stellt.

Diese Aufgabe wird durch eine thermisch leitende Platte, ein thermoaktives Deckenverkleidungssystem, ein Verfahren zur Herstellung einer thermisch leitenden Platte, und die Verwendung einer thermisch leitenden Platte nach einem der unabhängigen Ansprüche erreicht. Beispielhafte Ausführungsformen sind in den abhängigen Ansprüchen dargestellt.

Gemäß der Erfindung ist eine thermisch leitende Platte für eine vorgesetzte Innenraumverkleidung vorgesehen, die einen Plattenwerkstoff aufweist und eine Vielzahl von eingelassenen Wärmeelementen, wobei der Plattenwerkstoff einen geringeren Wärmedurchlassgrad aufweist als die Wärmeleitelemente. Die Wärmeleitelemente erstrecken sich wenigstens von der Nähe einer ersten Oberfläche bis zu einer zweiten Oberfläche. Die erste und die zweite Oberfläche sind auf zwei verschiedenen Seiten der Platte vorgesehen, wobei die erste Oberfläche eine einem Raum zuzuwendende Seite bildet. Die Wärmeleitelemente sind als in den Plattenwerkstoff eingelassene Stege ausgebildet, die sich in ihrer Länge über wenigstens die Hälfte der Plattenabmessung erstrecken. Die Wärmeleitelemente sind auf der zweiten Oberfläche mit einer Wärme- oder Kühlvorrichtung verbindbar.

Die "thermisch leitende Platte" wird auch als Wärmeleitplatte oder als Kälteleitplatte bezeichnet. Die beiden Oberflächen bilden die beiden Plattenflächen, und an der Platte sind seitlich Stirnflächen vorgesehen. Die Wärmeleitelemente können auch als Wärmeleitschienen bezeichnet werden.

Beispielsweise sind die Wärmeleitelemente linear ausgebildet. Die Wärmeleitelemente können auf die Länge bezogen einstückig ausgebildet sein, wobei sie aus mehreren Teilen zusammengesetzt sein können.

Die Wärmeleitelemente erstrecken sich z.B. über wenigstens die Hälfte der Plattenfläche fortlaufend, wobei "fortlaufend" bedeutet, dass die Stege in ihrer Längsrichtung, d.h. in die Richtung der Plattenfläche nicht unterbrochen sind.

Die Wärmeleitelemente haben z.B. eine Modullänge von maximal ca. 360 mm.

Die Wärmeleitelemente können sich über eine Modullänge durchgehend erstrecken, wobei mehrere thermisch leitende Platten zu einer größeren Systemplatte zusammengesetzt sind, so dass die Systemplatte mehrere Module umfasst, so dass mehrere Wärmeleitelemente hintereinander mit Abstand zueinander angeordnet sein können.

Die Wärmeleitelemente sind beispielsweise über wenigstens die Hälfte der Plattenabmessung, d.h. in Richtung der Fläche, also über Länge und/oder Breite, durchgehend ausgebildet, wobei "durchgehend" das gleiche Querschnittsprofil bezeichnet. Neben der Breite und der Länge wird die Plattenabmessung noch durch die Plattendicke bestimmt.

Die Wärmeleitelemente weisen einen Wärmedurchlassgrad auf, der mindestens zweimal so groß ist wie der des Plattenwerkstoffs. Der Plattenwerkstoff weist beispielsweise einen Wärmedurchlassgrad von maximal ca. 0,5 W/mK auf, z.B. maximal ca. 0,2 W/mK, oder 0,1 W/mK.

Der Begriff "Nähe" hinsichtlich der Oberfläche bezeichnet einen Bereich, der sich von der äußeren Oberfläche bis zu ca. 30 % in die Platte hinein erstreckt, z.B. bis zu ca. 10 % oder bis zu ca. 5 %. Beispielsweise erstrecken sich die Wärmeleitelemente von der ersten Oberfläche bis zur zweiten Oberfläche.

Die Wärmeleitelemente können auf der ersten Oberfläche thermisch mit einer flächigen Wärmeaustauscheinrichtung verbunden sein, z.B. mit einer Wärmeaustauschplatte.

Die thermisch leitende Platte weist insgesamt eine thermische Leistung von mindestens 50 W/qm auf, beispielsweise eine Kühlleistung von mindestens 50 W/qm z.B. 68 W/qm. Die Platte weist insgesamt eine thermische Leistung im Bereich von ca. 65 bis 95 W/qm gemäß einem Beispiel auf. Neben der erwähnten Kühlleistung kann auch eine Wärmeleistung vom mindestens 50 W/qm, z.B. 68 W/qm vorgesehen sein.

In einem Beispiel ist die Platte in einem Befestigungsabstand an einer Tragkonstruktion befestigbar, wobei sich die Wärmeleitelemente über wenigstens die Hälfte des Befestigungsabstands durchgehend erstrecken. Die Wärmeleitelemente erstrecken sich z.B. über wenigstens ca. 75 % des Befestigungsabstands durchgehend, z.B. über ca. 90 % des Befestigungsabstands.

In einem Beispiel sind die Wärmeleitelemente mit einem maximalen Abstand von ca. 100 mm zueinander angeordnet.

Beispielsweise ist ein maximaler Abstand der linearen Wärmeleitelemente in Querrichtung von ca. 50 mm vorgesehen, z.B. 30 mm. In Längsrichtung ist z.B. ein Abstand von maximal ca. 50 mm vorgesehen.

Beispielsweise ist ein maximaler Abstand der linearen Wärmeleitelemente in Längsrichtung in einem Bereich von ca. 10 bis 150 mm vorgesehen. In Querrichtung ist beispielsweise ein maximaler Abstand der linearen Wärmeleitelemente in einem Bereich von ca. 10 bis 100 mm vorgesehen.

In einem Beispiel sind die Wärmeleitelemente mindestens selbsttragende Profilvorrichtungen, die in den Plattenwerkstoff eingelassen sind.

Der Begriff "mindestens selbsttragend" bedeutet z.B., dass die Profilvorrichtungen über ihre Länge wenigstens ihr Eigengewicht tragen können. Beispielsweise können die Profilvorrichtungen auch mehr Lasten tragen, z.B. zur Unterstützung des Plattenwerkstoffs.

Erfindungsgemäß sind die Wärmeleitelemente an unterschiedliche Plattendicken anpassbare Profilvorrichtungen.

Beispielsweise sind die Wärmeleitelemente als Profilvorrichtungen vorgesehen, die bei der Herstellung der Platte unterschiedliche Höhen aufweisen können, um sich in ihrer Höhenerstreckung in Richtung der Plattendicke an unterschiedliche vorliegende Plattenhöhen anzupassen, z.B. wenn sich die Platte in ihrer Dicke bzw. Stärke während des Herstellens ändert, z.B. in der Dicke schrumpft oder die Platte in ihrem Querschnitt dicker wird.

In einem weiteren Beispiel weisen die Wärmeleitelemente an unterschiedliche Plattendicken anpassbare Profilvorrichtungen auf.

Der Begriff "anpassbar" bedeutet beispielsweise, dass ein und dieselbe Profilvorrichtung für verschiedene Plattenstärken einsetzbar ist.

Gemäß einer Ausführungsvariante weisen die Profilvorrichtungen in einem ersten Zustand eine erste Höhe auf und in einem zweiten Zustand eine zweite Höhe, die geringer ist als die erste Höhe. Der Übergang vom ersten Zustand in den zweiten Zustand ist stufenlos vorgesehen.

Der Plattenwerkstoff bewirkt z.B. während des Herstellungsvorgangs der Platte eine Verringerung der Plattenstärke, und die Profilvorrichtungen sind für diese Verringerung ausgelegt. Als Plattenwerkstoff kann beispielsweise ein Blähglasgranulat vorgesehen sein.

Gemäß einer Ausführungsvariante bestehen die Profilvorrichtungen jeweils aus wenigstens zwei ineinander gesteckten Profilsegmenten.

Beispielsweise sind drei Profilsegmente vorgesehen, z.B. ein erstes Profil, in welches ein zweites Profil einschiebbar ist, und ein drittes Profil, das in das zweite Profil einschiebbar ist, wobei "einschiebbar" in den Profilinnenquerschnitt quer zur Längsrichtung einsetzbar bedeutet.

Beispielsweise ist das erste Profilsegment ein U-Profil und das zweite und das dritte Profilsegment sind U- oder H-Profile, z.B. H-Profile mit gekürzten Schenkeln auf derjenigen Seite, die zuerst in das andere Profilsegment eingeschoben wird, d.h. an der dem Profilsteg des aufnehmend Profilsegments zugewandten Seite.

In einem Beispiel ist vorgesehen, dass die Profilvorrichtungen eine Aufnahme zum wenigstens teilweisen Aufnehmen eines Stegsegments aufweisen. Das Stegsegment ragt dabei von einer der beiden Oberflächen, d.h. von der ersten oder zweiten Oberfläche in die erste Aufnahme hinein, wobei das Stegsegment und die Aufnahme thermisch gekoppelt sind. Das Stegsegment ist z.B. thermisch mit der ersten Oberfläche verbunden, und die Aufnahme ist thermisch mit der zweiten Oberfläche verbunden, oder umgekehrt.

Gemäß einer Ausführungsvariante weisen die Profilvorrichtungen eine erste Aufnahme auf zum wenigstens teilweisen Aufnehmen eines ersten Stegsegments, und eine zweite Aufnahme zum wenigstens teilweisen Aufnehmen eines zweiten Stegsegments. Das erste Stegsegment ragt dabei von der ersten Oberfläche in die erste Aufnahme hinein, und das zweite Stegsegment von der zweiten Oberfläche in die zweite Aufnahme. Die erste Aufnahme ist mit der zweiten Aufnahme thermisch gekoppelt und verbindet das erste Stegsegment thermisch mit dem zweiten Stegsegment.

Die beiden Aufnahmen weisen eine ausreichende Aufnahmetiefe auf, so dass das Stegsegment in einer ersten Aufnahmeposition bereits gehalten ist und eine thermische Verbindung bewirkt bei gleichzeitig maximaler Plattendicke, und in einer zweiten Aufnahmeposition weiter eingeschoben oder mehr aufgenommen ist, so das eine geringere Plattendicke möglich ist, wobei das zweite Stegsegment in der zweiten Aufnahmeposition ebenfalls gehalten ist und eine thermische Verbindung bewirkt. Die beiden Aufnahmen können dabei jeweils mit einem Anschlag ausgebildet sein, um eine Begrenzung des Zusammenschiebens der beiden Stegsegmente zu ermöglichen. Die Stegsegmente können kleine Vertiefungen aufweisen und die Aufnahmen können dazu passende kleine Vorsprünge aufweisen, um bei einem Einschieben der Stegsegmente ein Einrasten zu bewirken, um beispielsweise die erste Aufnahmeposition vorzugeben.

In einem Beispiel weisen das erste und das zweite Stegsemente die gleiche Länge auf. In einem anderen Beispiel sind die Stegsemente unterschiedlich lang ausgebildet.

In einem Beispiel sind die erste und die zweite Aufnahme als S-förmiges Profil ausgebildet, das bezogen auf eine horizontal angeordnete Platte liegend angeordnet ist. Das S-Profil ist Beispiel einstückig ausgebildet. In einem weiteren Beispiel sind die erste und die zweite Aufnahme jeweils als C-förmiges Profil ausgebildet, wobei die beiden C-Profile, bezogen auf eine horizontal angeordnete Platte, liegend angeordnet werden, wobei die beiden Cs in entgegengesetzte Richtungen weisen und miteinander verbunden sind.

Gemäß einer Ausführungsvariante weisen sind die Stegsegmente als Laschen ausgebildet, die von einem thermisch leitenden Plattenwerkstoff, der im Bereich der ersten oder zweiten Oberfläche angeordnet ist, in Richtung der Plattenmitte abstehen; wobei die Laschen Flächensegmente des Plattenwerkstoffs sind, die von der Platte abstehen.

Beispielsweise ist der Plattenwerkstoff eine Metallfläche und die Flächensegmente sind durch Ausstanzen und anschließendes Abwinkeln ausgebildet.

In einem Beispiel sind die Flächensegmente als eine Vielzahl von abstehenden Laschen ausgebildet und die ersten und zweiten Aufnahmen erstrecken sich über mehrere Laschen und verbinden diese in Plattenrichtung, d.h. in Richtung der Plattenfläche, bzw. quer zur Plattendicke.

In einem Beispiel sind die Flächensegmente als eine über wenigstens die Hälfte der Plattenabmessung abstehenden lineare Winkel ausgebildet, die mehrere einzelne erste und zweite Aufnahmen, die miteinander verbunden sind, thermisch und konstruktive miteinander verbinden. Die Winkel sind in Plattenrichtung länger als die ersten und zweiten Aufnahmen ausgebildet. Die Aufnahmen sind als Verbindersegmente ausgebildet, die über die Winkel verbunden werden.

Die Profilsegmente können mit Anschlägen ausgebildet sein, die ein Zusammenschieben kleiner als eine Plattenmindestdicke verhindern.

Gemäß einer Ausführungsvariante weist wenigstens ein Teil der Profilsegmente der Profilvorrichtungen im ersten Zustand Hohlräume auf zum wenigstens teilweise aufnehmen benachbarter Profilsegmente. Die Hohlräume sind wenigstens teilweise mit einem in seinem Volumen veränderbaren Füllmaterial befüllt zur Abdichtung gegen eindringenden Plattenwerkstoff bei der Herstellung.

Jede Profilvorrichtung kann einen Hohlraum aufweisen, der teilweise von Profilsegmenten umschlossen wird, wobei jeder Hohlraum ein Softprofil aufweisen kann, das sich zusammendrücken lässt.

Das Füllmaterial ist beispielsweise ein Silikonschaum oder Chloropren-Kautschuk, der auch unter dem Markennamen Neopren bekannt ist. Das Füllmaterial ist beispielsweise ein PU- oder PUR-Schaum, oder ein Zell-Polyethylen oder ein Zell-Kautschuk.

In einem abgewandelten Beispiel sind die Profilvorrichtungen zum eingreifenden Einsetzen eines Befestigungselements zum Halten der thermisch leitenden Platte ausgebildet.

Der Begriff "eingreifend" bezeichnet eine mindestens in einer ersten Richtung haltende Verbindung des Befestigungselements mit der Profilvorrichtung, wobei die erste Richtung eine Halterichtung bildet.

In einem abgewandelten Beispiel weisen die Profilvorrichtungen an der zweiten Oberfläche der Platte Öffnungen zum Einsetzen von Befestigungselementen auf. Die Öffnungen sind zum Einsetzen eines Säbelzahnschwert- oder Sägezahnschwertprofils ausgebildet. Die Profilsegmente sind mit seitlichen Verrastungen ausgebildet, die ein Zusammenschieben in Richtung der Plattendicke ermöglichen und ein Auseinanderziehen in der Gegenrichtung verhindern und das oberste Profilsegment ist zum Einsetzen eines Halteelements ausgebildet.

Die Öffnungen können quer zur Halterichtung seitliche Ausnehmungen aufweisen zum hintergreifenden Halten von Vorsprüngen eines Befestigungselements.

Die Profilsegmente können z.B. mit seitlichen Verrastungen ausgebildet sein, die ein Zusammenschieben in Richtung der Plattendicke ermöglichen und ein Auseinanderziehen in der Gegenrichtung verhindern. Beispielsweise ist das oberste Profilsegment zum Einsetzen eines Haltesegments ausgebildet.

In einem Beispiel weisen die Profilvorrichtungen an der zweiten Oberfläche der Platte Öffnungen zum Einsetzen von Befestigungselementen auf.

Gemäß einem weiteren Beispiel sind eine Einsetzöffnung und dazu passende Einsetzprofile vorgesehen, bei denen eine rastfreie Halterung vorgesehen ist, d.h. eine Halterung mit seitlichen glatten Profilierungen ohne Rasterung.

Das oberste Profilsegment ist beispielsweise mit Kleber, z.B. Koll-Kleber montiert bzw. fixiert. Mit einem Koll-Kleber wird nach der Herstellung der Platte das weitere Wärmetauscherprofil auf der Rückseite verklebt gegen Abzeichnungen. Es kann auch ein anderer Kleber verwendet werden, oder eine dauerelastische Masse, oder ein stark komprimierter Silikon- oder Kunststoffschaum.

Gemäß einer Ausführungsvariante ist zur Verbesserung des thermischen Energieaustauschs vorgesehen, dass a) auf der ersten Oberfläche eine erste Wärmeleitfläche auf dem Plattenwerkstoff angeordnet ist, die mit den Wärmeleitelementen thermisch verbunden ist, und/oder b) auf der zweiten Oberfläche eine zweite Wärmeleitfläche auf dem Plattenwerkstoff angeordnet ist, die mit den Wärmeleitelementen thermisch verbunden ist und mit welcher eine Wärme- oder Kühlvorrichtung verbindbar ist.

Gemäß einer Ausführungsvariante ist der Plattenwerkstoff schallabsorbierend und die Platte ist auf der dem Raum zugewandten Seite mit einer Endbeschichtung beschichtbar.

Die Endbeschichtung ist beispielsweise möglichst schalltransparent, d.h. ein von dem Plattenwerkstoff zu absorbierendes Schallspektrum passiert die Endbeschichtung möglichst ungehindert. Die Endbeschichtung kann beispielsweise auch schallabsorbierend sein.

Zum Beispiel kann als Endbeschichtung eine Putzbeschichtung vorgesehen sein, oder eine Farbbeschichtung.

Die schallabsorbierende Eigenschaft kann auch ohne die Beschichtbarkeit, z.B. die Verputzbarkeit, vorgesehen sein, z.B. bei einer flächigen Verkleidung mit einem sichtbaren Textil, z.B. in Form einer Bespannung, die möglichst luftdurchlässig und wärmeleitend ist, um nicht wärmedämmend zu wirken.

Der Begriff "schallabsorbierend" umfasst einen Schallabsorptionsgrad beispielsweise im Bereich von ca. aw = 0,4 - 0,8, z.B. 0,45 bis 0,8.

Insbesondere der Plattenwerkstoff kann schallabsorbierend sein. Das erste flächige Wärmeleitelement weist beispielsweise Öffnungen auf, um Schallwellen an den Plattenwerkstoff durchzulassen.

Die Platte kann vor oder nach dem Einbau mit einer Beschichtung versehen werden; die Platte kann beispielsweise verputzt werden oder mit einer Farbbeschichtung beschichtet werden. Mehrere, aneinandergrenzende Platten können auf der dem Raum zugewandten Seite z.B. fugenlos verputzbar sein. Beispielsweise können die Fugen mit Abdeckelementen überdeckt werden.

Mehrere aneinandergrenzende Platten oder Systemplatten können auch verfugt werden, beispielsweise kann eine zwischen den Platten vorhandene Fuge verspachtelt werden.

Beispielsweise ist die auf der dem Raum zugewandten Seite vorgesehene Beschichtung, z.B. Putzschicht oder Farbschicht, akustisch möglichst transparent, um den Schall an den Plattenwerkstoff durchzulassen.

Auf der Oberseite der Platte kann eine Diffusionssperre angeordnet sein, die im Bereich der Wärmeleitelemente aufgeschnitten ist.

Im Zusammenhang mit den Begriffen "oberhalb" und "unterhalb" oder Abwandlungen davon, sei darauf hingewiesen, dass diese sich auf eine Einbausituation als abgehängtes Deckenelement beziehen; bei Einbau in eine Wand sind, bei Betrachtung vom Raum her, die Begriffe entsprechend zu ersetzen (unterhalb=vor, oberhalb=hinter).

Gemäß der Erfindung kann die thermisch leitende Platte ein abgehängtes Deckenelement, bzw. eine Innenraumverkleidung im Deckenbereich bilden.

Gemäß einem weiteren Beispiel ist vorgesehen, dass die thermisch leitende Platte eine im Wandbereich eingesetzte Innenraumverkleidung bildet.

In einem abgewandelten Beispiel weist eine Systemplatte eine Vielzahl von Platten als Module auf und ist mit virtuellen Modultrennlinien in eine Vielzahl von Modulen unterteilbar, wobei der Verlauf der Wärmeleitelemente in Übereinstimmung mit den Modultrennlinien unterbrochen ist, wobei die Enden der Wärmeleitelemente einen Sicherheitsabstand zu den Modultrennlinien aufweisen.

Beispielsweise sind mehrere thermisch leitende Platten zu einer großen Systemplatte verbunden, bei denen die einzelnen thermisch leitenden Platten die Module bilden.

Der Sicherheitsabstand beträgt beispielsweise 1 bis 3 cm.

Das Modul beträgt beispielsweise 400 mm x 400 mm und als Größe für die Systemplatte kann zum Beispiel 2.400 mm x 1.200 mm vorgesehen sein.

Die erste und/oder die zweite Wärmeleitfläche können im Hinblick auf die virtuellen Modultrennlinien als eine Vielzahl von Wärmeleitflächensegmenten unterteilt sein, so dass die Systemplatte in den vorgegebenen Modultrennlinien leicht durchtrennt werden kann.

Gemäß der Erfindung ist ein thermoaktives Deckenverkleidungssystem vorgesehen, das wenigstens eine thermisch leitende Platte nach einem der vorhergehenden Beispiele aufweist und eine Wärme- oder Kühlvorrichtung. Die Wärme- oder Kühlvorrichtung ist auf der Seite der zweiten Oberfläche angeordnet und die Wärme- oder Kühlvorrichtung ist mit den Wärmeleitelementen der thermisch leitenden Platte thermisch verbunden.

Gemäß einer ersten Ausführungsvariante ist die Wärme- oder Kühlvorrichtung als thermisch aktivierbare Bauteilmasse ausgebildet.

Die Bauteilmasse umfasst z.B. eine massive Wand- oder Deckenkonstruktion, z.B. eine Betonwand oder Betondecke.

Auf der Seite der zweiten Oberfläche sind beispielsweise Kopplungselemente vorgesehen, zur thermisch Kopplung der Wärmeleitelemente mit der thermisch aktivierbaren Bauteilmasse. Die thermisch leitende Platte ist z.B. mit den Kopplungselementen gehalten.

Gemäß einer zweiten Ausführungsvariante weist die Wärme- oder Kühlvorrichtung eine Leitungseinrichtung für ein Heiz- oder Kühlmedium auf, wobei die Leitungseinrichtung eine Vielzahl von Leitungen aufweist.

Auf der Seite der zweiten Oberfläche können Kopplungselemente vorgesehen sein, um die Leitungen mit den Wärmeleitelementen thermisch zu verbinden.

Gemäß der Erfindung ist ein Verfahren zur Herstellung einer thermisch leitenden Platte mit den folgenden Schritten vorgesehen:
a) Einlegen wenigstens einer höhenveränderlichen Profilvorrichtung in eine Formvorrichtung, wobei sich die Profilvorrichtung über wenigstens die Hälfte einer Modulgröße erstreckt, die in einer Vielzahl die Plattenabmessung ergibt, und beim Einlegen eine erste Höhe aufweist;
b) Einbringen eines schüttfähigen Plattenwerkstoffwerkstoff in einem Ausgangszustand mit einer ersten Höhe; und
c) Umwandeln des Plattenwerkstoffwerkstoffs vom Ausgangszustand in einen Endzustand mit einer zweiten Höhe; das Umwandeln umfasst eine kontinuierliche Verringerung der Höhe, wobei die Profilvorrichtung während des Umwandelns kontinuierlich eine zweite Höhe annimmt, die geringer als die erste Höhe ist.

Gemäß der Erfindung kann auch vorgesehen sein, dass die Vielzahl 1 beträgt, so dass die Modulgröße gleich der Plattengröße ist.

Gemäß einer Ausführungsvariante ist der Plattenwerkstoff, d.h. das Plattenmaterial, ein Blähgranulat, und das Umwandeln umfasst ein Zuführen von Druck und Temperatur.

Gemäß der Erfindung ist auch eine Verwendung einer thermisch leitenden Platte nach einem der vorhergehenden Ausführungsvarianten und Beispiele zum wenigstens teilweisen Umhüllen eines Innenraums vorgesehen, wobei die Wärmeleitelemente für den thermischen Energietransport zwischen Innenraum und einer Wärme- und Kühlvorrichtung auf der dem Raum abgewandten Seite vorgesehen sind.

Gemäß der Erfindung ist vorgesehen, dass ein thermisch schlecht leitender Plattenwerkstoff mit möglichst vielen thermisch leitenden Elementen zu einer Platte kombiniert wird, um einen Wärmetransport von der einen Seite auf die andere Seite der Platte zu gewährleisten. Die thermisch leitenden Elemente sind dazu beispielsweise linear ausgebildete Stege, die auch zur Stabilität der Platte insgesamt beitragen können. Die in den Plattenwerkstoff eingelassenen Stege übernehmen die Funktion, Wärme von der einen Seite zur anderen Seite zu transportieren. Dazu kann beispielsweise eine Wärmequelle auf der dem Raum abgewandten Seite vorgesehen sein, so dass mit den Wärmeleitelementen dem Raum zugeführt werden kann. Alternativ kann auch eine Kältequelle auf der dem Raum ab gewandten Seite vorgesehen sein, um dem Raum Wärme zu entziehen. Beispielsweise kann als Wärme- und Kältequelle das gleiche Element bzw. Bauteil oder System verwendet werden, jedoch selbstverständlich mit unterschiedlicher Wärmetransportvorrichtung. Im Falle eines erwünschten Zuführens wird Wärme zur Verfügung gestellt und im Falle eines erwünschten Abkühlens des Raums wird die Wärme abgeführt, bzw. ein Kühlmedium oder ein anderes Kühlelement zur Verfügung gestellt. Um ein möglichst einfach zu montierendes System zur Verfügung zu stellen, ist gemäß einem Beispiel vorgesehen, dass eine größere Innenraumverkleidungssystemplatte aus mehreren Modulen bzw. Platten zusammengesetzt ist. Dies ergibt eine einfachere Handhabung bei Transport und Montage, wobei das Vorsehen von Modultrennlinien die Anpassung an unterschiedliche Geometrien, bzw. Abmessungen erlaubt.

Es sei darauf hingewiesen, dass die Merkmale der Ausführungsvarianten und Beispiele der Vorrichtungen bzw. des Systems auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist, wobei sich synergetische Effekte ergeben können, die über die Addition der verschiedenen Merkmale hinaus geht.

Nachfolgend wird anhand der beigefügten Zeichnungen näher auf Ausführungsbeispiele der Erfindung eingegangen. Es zeigen:
- **Fig. 1**: ein Ausführungsbeispiel einer thermisch leitende Platte für eine vorgesetzte Innenraumverkleidung im Querschnitt in Fig. 1A, eine erste Ausführungsvariante in einer Draufsicht in Fig. 1B und in einem Schnitt in einer Richtung quer zur Richtung des Schnitts aus Fig. 1A in Fig. 1C; und eine zweite Ausführungsvariante in einer Draufsicht in Fig. 1D und in einem Schnitt in einer Richtung quer zur Richtung des Schnitts aus Fig. 1A in Fig. 1E;
- **Fig. 2**: einen Ausschnitt eines weiteren Beispiels für eine thermisch leitende Platte in einem Plattenquerschnitt in einer ersten Ausführungsvariante in Fig. 2A, und in einer zweiten Ausführungsvariante in Fig. 2B;
- **Fig. 3A**: ein Ausführungsbeispiel einer anpassbaren Profilvorrichtung in unterschiedlichen Zuständen im Querschnitt;
- **Fig. 3B**: eine Darstellung der beiden Zustände der anpassbaren Profilvorrichtung aus Fig. 3A;
- **Fig. 4**: ein weiteres Ausführungsbeispiel einer anpassbaren Profilvorrichtung, mit unterschiedlichen Zuständen im Querschnitt in Fig. 4A und Fig. 4B, und ein Beispiel für als Laschen abstehende Stegsegmente in einem Querschnitt in Fig. 4C und einen Herstellungsschritt für die Stegsegmente in einer Draufsicht in Fig. 4D und einem dazu gehörigen Querschnitt in Fig. 4E;
- **Fig. 4B**: ein Ausführungsbeispiel einer anpassbaren Profilvorrichtung in unterschiedlichen Zuständen im Querschnitt;
- **Fig. 5A**: ein abgewandeltes Beispiel eines Wärmeleitelements in einem Plattenquerschnitt;
- **Fig. 5B**: ein abgewandeltes Beispiel eines Wärmeleitelements zum Einsetzen von Befestigungselementen ausgebildet in einem Querschnitt;
- **Fig. 6**: ein weiteres Ausführungsbeispiel einer thermisch leitenden Platte mit flächigen Wärmeleitelementen auf beiden Seiten in einem Querschnitt;
- **Fig. 7**: eine Explosionsdarstellung eines weiteren Ausführungsbeispiels einer thermisch leitenden Platte;
- **Fig. 8A**: eine Isometrie eines Ausführungsbeispiel für eine thermisch leitende Platte mit teilweise aufgeschnittenen Schichten;
- **Fig. 8B**: eine weitere Isometriedarstellung der thermisch leitenden Platte aus Fig. 8A mit teilweise transparenten Schichten bzw. Komponenten;
- **Fig. 9**: einen Schnitt durch ein Ausführungsbeispiel für eine thermisch leitende Platte;
- **Fig. 10**: einen Schnitt durch ein Ausführungsbeispiel für ein auf der dem Raum zugewandten Seite angeordneten Wärmeleitelement;
- **Fig. 11A**: eine Draufsicht einer Wärmeleitfläche auf der dem Raum abgewandten Seite und einer Wärmeleitfläche auf der dem Raum zugewandten Seite gemäß einem Ausführungsbeispiel;
- **Fig. 11B**: eine isometrische Darstellung der beiden Wärmeleitflächen aus Fig. 11A;
- **Fig. 12**: eine Übersicht zu möglichen Modulgrößen gemäß einem abgewandelten Beispiel;
- **Fig. 13**: ein Ausführungsbeispiel für ein thermoaktives Deckenverkleidungssystem, bei dem als Wärme- oder Kühlvorrichtung eine thermisch aktivierbare Bauteilmasse vorgesehen ist, in einem Querschnitt;
- **Fig. 14**: ein Ausführungsbeispiel für ein thermoaktives Deckenverkleidungssystem, bei dem als Heiz- oder Kühlvorrichtung eine Leitungseinrichtung vorgesehen ist, die eine Vielzahl von Leitungen aufweist, in einem Querschnitt;
- **Fig. 15**: einen Querschnitt durch ein weiteres Ausführungsbeispiel eines thermoaktiven Deckenverkleidungssystems;
- **Fig. 16**: eine isometrische Draufsicht auf das thermoaktive Deckenverkleidungssystem aus Fig. 15, wobei die Draufsicht auf die dem Raum abgewandte Seite erfolgt;
- **Fig. 17**: ein weiteres Ausführungsbeispiel des thermoaktiven Deckenverkleidungssystems aus Fig. 15 in einer isometrischen Draufsicht;
- **Fig. 18**: ein Verfahren zur Herstellung einer thermisch leitenden Platte gemäß einem Ausführungsbeispiel; und
- **Fig. 19**: ein weiteres Ausführungsbeispiel eines Verfahrens zur Herstellung einer thermisch leitenden Platte.

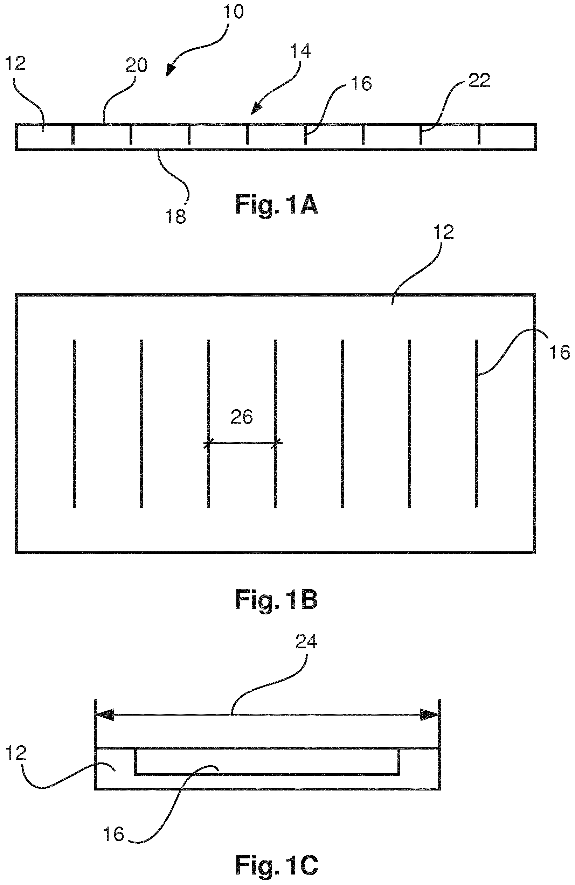

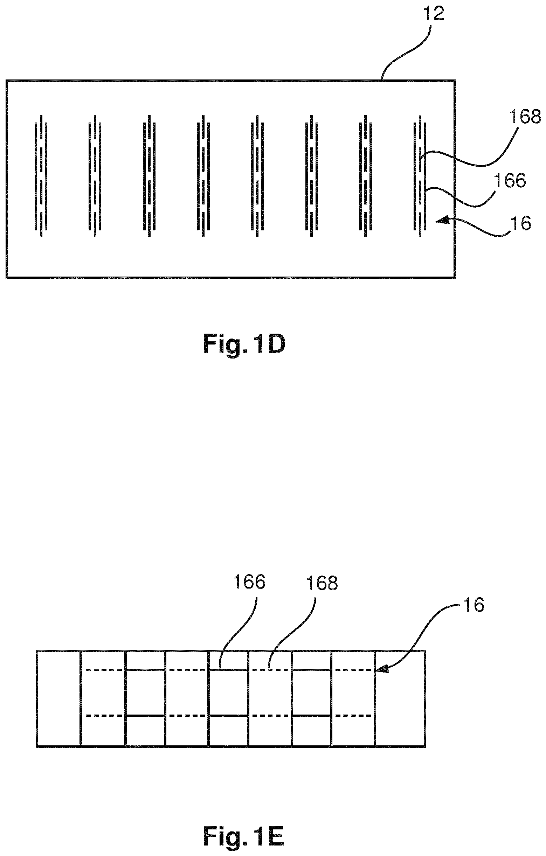

Fig. 1 zeigt einen Querschnitt einer thermisch leitenden Platte 10 für eine vorgesetzte Innenraumverkleidung. Die Platte 10 weist einen Plattenwerkstoff 12 und eine Vielzahl 14 von eingelassenen Wärmeleitelementen 16 auf. Der Plattenwerkstoff 12 weist einen geringeren Wärmedurchlassgrad auf als die Wärmeleitelemente. Die Wärmeleitelemente 16 erstrecken sich wenigstens von der Nähe einer ersten Oberfläche 18 bis zu einer zweiten Oberfläche 20. Die erste Oberfläche ist eine einem Raum zuzuwendende Seite, und die zweite Oberfläche ist eine dem Raum ab gewandte Seite.

Die Wärmeleitelemente sind als in den Plattenwerkstoff eingelassene Stege 22 ausgebildet, die sich in ihrer Länge über wenigstens die Hälfte der Plattenabmessung erstrecken. Dies ist beispielsweise in Fig. 1B in einer Ansicht der Plattenebene dargestellt. Die Wärmeleitelemente 16 sind auf der zweiten Oberfläche 20 mit einer Wärme- oder Kühlvorrichtung verbindbar, die in Fig. 1A bis C nicht näher dargestellt ist.

In Fig. 1C ist in einem weiteren Schnitt durch die Platte, der quer zu der Schnittrichtung in Fig. 1A verläuft, dargestellt, dass sich die Stege 22 über wenigstens die Hälfte der Plattenabmessung erstrecken. Die Plattenabmessung ist beispielsweise mit einem Pfeil 24 dargestellt.

Gemäß einem weiteren Beispiel, das ebenfalls in Kombination mit Fig. 1C angedeutet ist, ist die Platte in einem Befestigungsabstand, beispielsweise im Plattenmaß 24, an einer Tragkonstruktion befestigbar, die in Fig. 1C nicht näher gezeigt ist. Die Wärmeleitelemente erstrecken sich über wenigstens die Hälfte des Befestigungsabstands durchgehend.

Die Wärmeleitelemente sind, wie in Fig. 1B gezeigt, beispielsweise mit einem maximalen Abstand 26 zueinander angeordnet, der beispielsweise ca. 100 mm beträgt. Gemäß einem weiteren Ausführungsbeispiel ist ein Abstand von ca. 50 mm vorgesehen, insbesondere ein Abstand von ca. 30 mm.

Es sei darauf hingewiesen, dass insbesondere die Fig. 1A bis 1C diesbezüglich nicht maßstabsgerecht gezeigt sind.

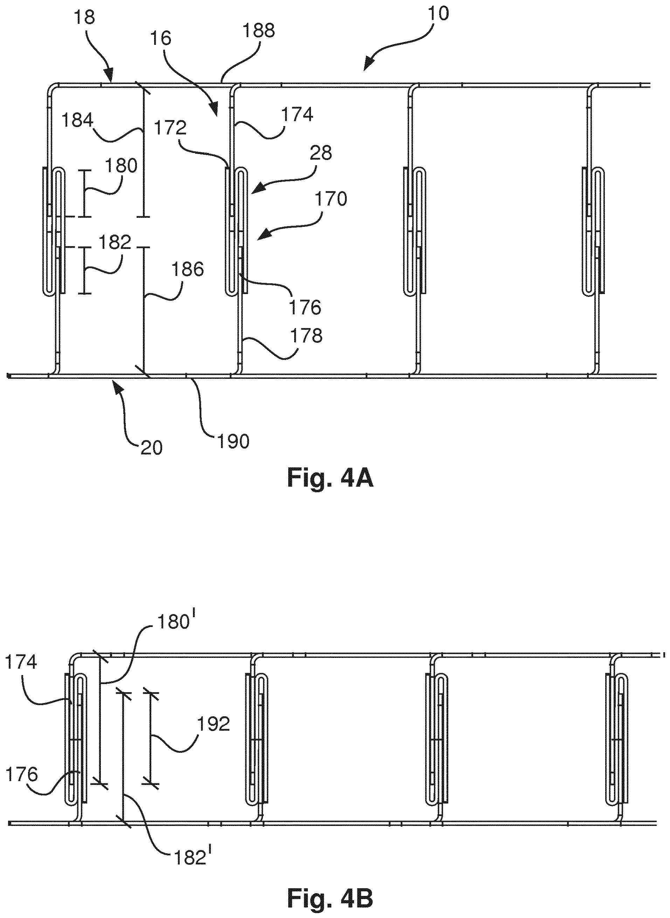

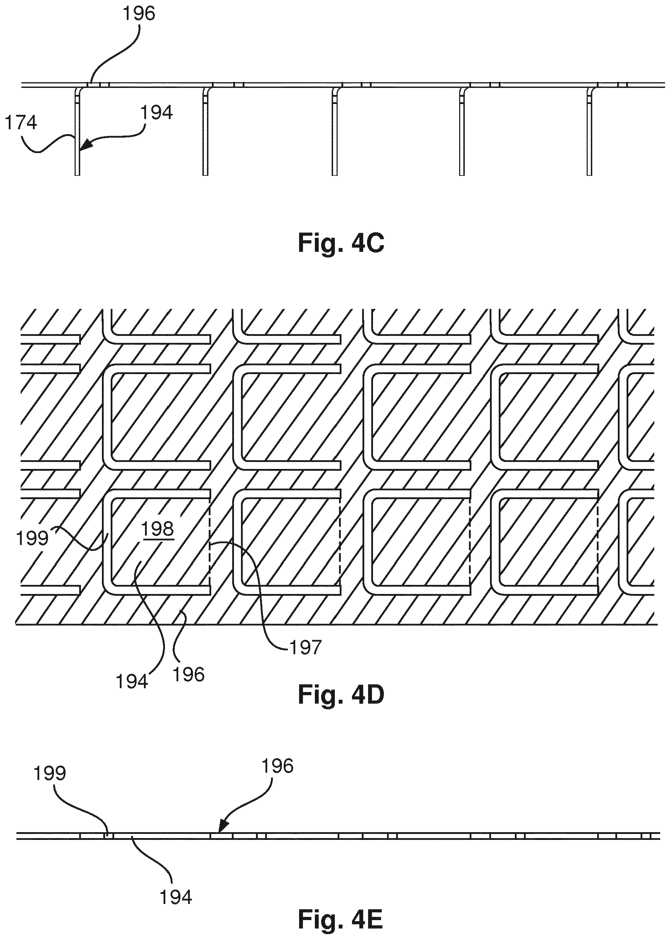

Fig. 1D zeigt, wie Fig. 1B, eine schematische Draufsicht. Die Wärmeleitelemente 16 sind aus durchgehenden Komponenten 166 und segmentierten Komponenten 168 zusammengesetzt, was auch anhand Fig. 4 näher erläutert wird. In Fig. 1E ist zu erkennen, dass beispielsweise die durchgehenden Komponenten 166 als sich in Plattenrichtung über mehrere Verbindungsbereich zwischen den beiden Plattenseiten erstreckende Komponenten ausgebildet sind, und die segmentierten Komponenten 168 als einzelne Verbindungsbereiche.

In einem weiteren, nicht dargestellten Ausführungsbeispiel sind die Verbindungsbereiche der beiden Plattenseiten als sich in Längsrichtung erstreckende Komponenten ausgebildet und die Verbindungsbereiche sind dafür einzelne, unterbrochene Komponenten.

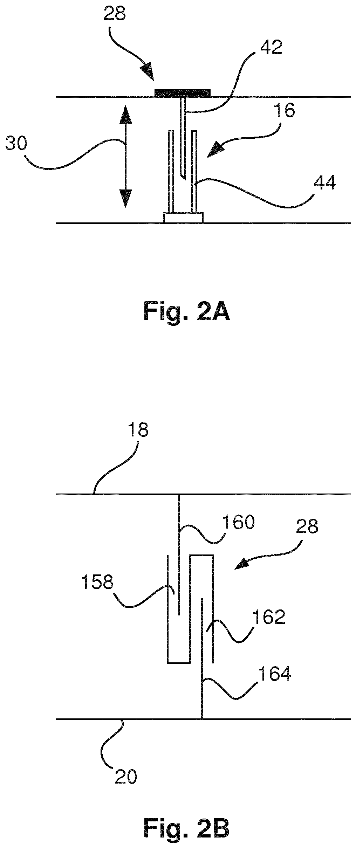

Gemäß dem in Fig. 2A gezeigten Ausführungsbeispiel können die Wärmeleitelemente 16 als an unterschiedliche Plattendicken anpassbare Profilvorrichtungen 28 ausgebildet sein. Die unterschiedlichen Plattendicken sind mit einem Doppelpfeil 30 angedeutet, der zugleich auch andeutet, dass die anpassbare Profilvorrichtung 28 an unterschiedliche Plattenmaße, bzw. Plattendicken angepasst werden kann. Mit anderen Worten, ein und dieselbe Profilvorrichtung lässt sich für verschiedene Plattenstärken verwenden.

Gemäß dem in Fig. 2B gezeigten Ausführungsbeispiel weisen die Profilvorrichtungen eine erste Aufnahme 158 auf zum wenigstens teilweisen Aufnehmen eines ersten Stegsegments 160, und eine zweite Aufnahme 162 zum wenigstens teilweisen Aufnehmen eines zweiten Stegsegments 164. Das erste Stegsegment 160 ragt von der ersten Oberfläche 18 in die erste Aufnahme 158 hinein, und das zweite Stegsegment 164 ragt von der zweiten Oberfläche 20 in die zweite Aufnahme 162 hinein. Die erste Aufnahme 158 ist mit der zweiten Aufnahme 162 thermisch gekoppelt und verbindet das erste Stegsegment 160 thermisch mit dem zweiten Stegsegment 164.

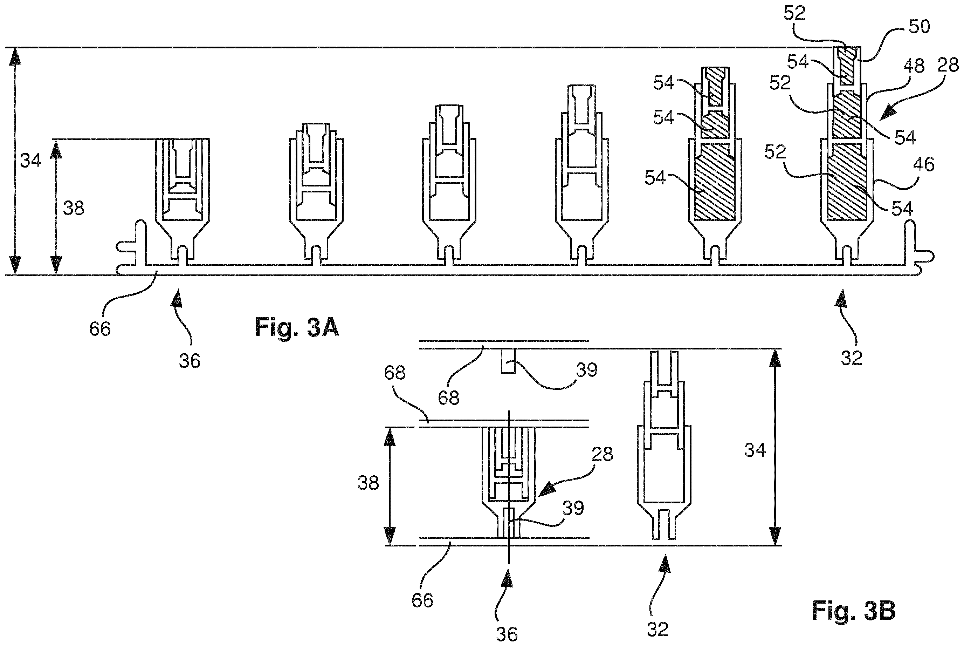

In Fig. 3A ist in einer Abfolge ein weiteres Ausführungsbeispiel gezeigt, bei dem die Profilvorrichtungen 28 in einem ersten Zustand 32 eine erste Höhe 34 aufweisen, wobei der erste Zustand in der Abfolge ganz rechts gezeigt ist. Die Abfolge stellt jeweils einen Querschnitt durch die anpassbare Profilvorrichtung 28 dar. In einem zweiten Zustand 36, der in der Abfolge ganz links gezeigt ist, weist die Profilvorrichtung 28 eine zweite Höhe 38 auf, die geringer als die erste Höhe 36 ist. Der Übergang vom ersten Zustand 32 in den zweiten Zustand 36 ist beispielsweise stufenlos, wobei in der Abfolge in Fig. 3A lediglich vier Zwischenzustände gezeigt sind, die jedoch bereits auf die stufenlose Anpassbarkeit hinweisen.

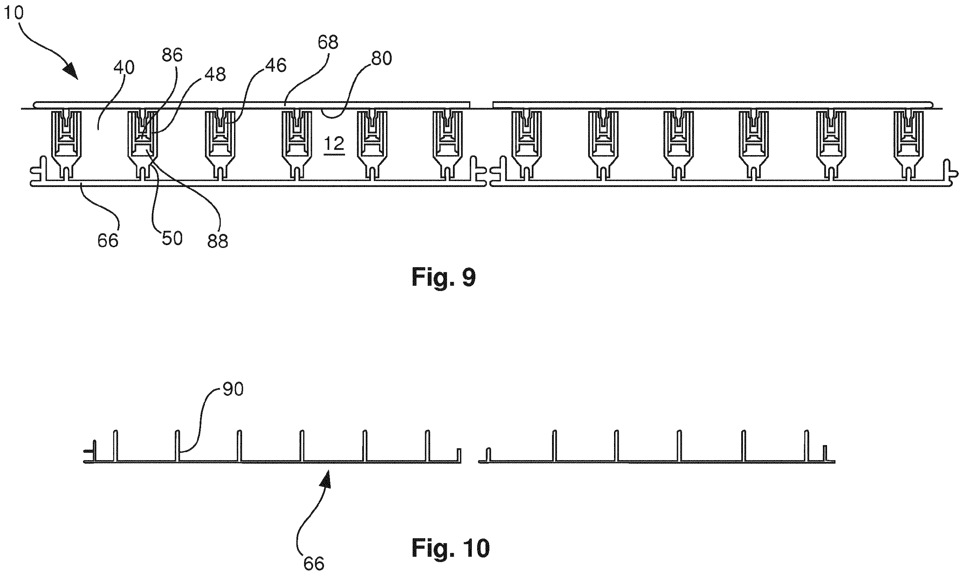

Beispielsweise kann die anpassbare Profilvorrichtung 28 verwendet werden, um bei einem Plattenwerkstoff, der während des Herstellungsvorgangs sich in seiner Dicke verringert, verwendet zu werden, wobei die Verringerung der Plattenstärke und die Anpassbarkeit der Profilvorrichtung 28 für eben diese Verringerung ausgelegt sind. Als Plattenwerkstoff kann beispielsweise ein Blähglasgranulat vorgesehen sein, dass beispielsweise in Fig. 9 mit Bezugszeichen 40 gekennzeichnet ist.

Bei den Wärmeleitelementen 16 handelt es sich beispielsweise um selbsttragende Profilvorrichtungen, die in den Plattenwerkstoff eingelassen sind, wobei der Begriff "selbsttragend" auch bedeuten kann, dass die Profilvorrichtungen über ihre Länge wenigstens ihr Eigengewicht tragen, und darüber hinaus auch beispielsweise Mehrlasten tragen können, z.B. zur Unterstützung des Plattenwerkstoffs.

Mit Bezug auf Fig. 2A und 2B sei noch erwähnt, dass die Profilvorrichtungen 28 jeweils aus wenigstens zwei ineinander gesteckten Profilsegmenten bestehen, beispielsweise einem oberen Profilsegment 42 und einem unteren Profilsegment 44.

Gemäß dem in Fig. 3A gezeigten Beispiel zur Verdeutlichung der Zustandsänderungen können auch drei Profilsegmente vorgesehen sein, z.B. ein erstes Profil 46, in welches ein zweites Profil 48 eingeschoben ist, sowie ein drittes Profil 50, welches in das zweite Profil eingeschoben ist. Die eingeschobenen Profile sind dabei beispielsweise in den Profilinnenquerschnitt quer zur Längsrichtung einschiebbar. Wie in Fig. 3A zu sehen ist, ist das erste Profil 46 beispielsweise ein U-Profil, das zweite und das dritte Profil 48, 50 sind als U-Profile ausgebildet, bzw. H-Profile mit gekürzten Schenkeln auf derjenigen Seite, die zuerst in das andere Profil eingeschoben wird.

An dieser Stelle sei darauf hingewiesen, dass die Beschreibungen hinsichtlich der Abfolge bei der Zustandsänderung in Fig. 3A zwar anhand der dreiteiligen Profilvorrichtung gezeigt sind, jedoch nicht auf diese Ausführungsvariante beschränkt sind, sondern als davon unabhängiges Merkmal zu sehen sind.

Ein weiterer Aspekt, der ebenfalls unabhängig von der konkret verwendeten Profilgeometrie ist, ist ebenfalls in Fig. 3A gezeigt, wobei dieser im Folgenden beschriebene Aspekt auch bei anderen Profilgeometrien, insbesondere auch einer anderen Zahl von Profilsegmenten vorgesehen ist.

Gemäß einem weiteren Ausführungsbeispiel, ebenfalls anhand der Fig. 3A beschrieben, weist wenigstens ein Teil der Profilsegmente der Profilvorrichtung im ersten Zustand Hohlräume 52 auf zum Aufnehmen benachbarter Profilsegmente. Die Hohlräume können beispielsweise wenigstens teilweise mit einem in seinem Volumen veränderbaren Füllmaterial 54 gefüllt sein, zur Abdichtung gegen eindringenden Plattenwerkstoff bei der Herstellung.

Beispielsweise kann jeweils für ein Profilsegment ein Softprofil vorgesehen sein, das sich zusammendrücken lässt. Beispielsweise kann ein Silikonschaum oder Chloropren-Kautschuk verwendet werden, oder auch ein PU- oder PUR-Schaum, sowie auch Zell-Polyethylen oder ein Zell-Kautschuk.

Unabhängig von der Materialwahl ist vorgesehen, dass sich das Füllmaterial 54 zunächst über den gesamten Hohlraum erstreckt, damit hier kein Material, d.h. Plattenwerkstoff eindringen kann. Erst beim Zusammendrücken, bzw. Zusammenschieben der Profilvorrichtung, bzw. der einzelnen Segmente, wird auch das Füllmaterial sukzessive zusammengequetscht, bzw. komprimiert.

In diesem Zusammenhang sei auch darauf hingewiesen, dass insbesondere bei ineinander gesteckten Profilsegmenten vorgesehen ist, dass die einzelnen Segmente mit einer möglichst großen Kontaktfläche aneinander anliegen, um hier einen möglichst guten Wärmetransport zu gewährleisten.

Beispielsweise wird durch die mehrteilige und in der Höhe anpassbare Profilvorrichtung für das Wärmeleitelement ein wichtiges fertigungstechnisches Problem im Zusammenhang mit beispielsweise Blähglasgranulat gelöst. Bei dieser Plattenfertigung ergibt sich beispielsweise aus der Porosität des Materials und des Fertigungsprozesses das Problem, dass die in die Form eingebreitete Masse für eine 30 mm dicke Platte vor dem Press- und Backvorgang ca. 50 mm hoch ist. Durch die Pressung wird die Plattenendstärke von 30 mm erreicht. Durch die anpassbare Profilvorrichtung, die auch als Softprofilliftelement bezeichnet wird, welches beispielsweise aus mehreren unterschiedlichen Aluminiumprofilen mit einer oder mehreren Zwischeneinlagen aus Silikonschaum besteht, kann dies berücksichtigt werden.

Beispielsweise kann im Fertigungsprozess die untere Wärmeleitschiene d.h. die untere Wärmeleitfläche mit den Elementen der Profilvorrichtung, z.B. des Softprofillifts, in die Backform eingebracht und positioniert werden. In der Grundstellung ist der Softprofillift ausgefahren und hat eine Höhe von ca. 50 mm. Das obere Profilsegment ist ebenfalls mit einem Softprofil, d.h. einem elastischen Einsatz zum Schutz gegen Blähglasgranulat ausgestattet. Nun kann vorsichtig die Masse in die Form eingebracht und über Richtkanten mittels Abziehscheit auf 50 mm abgezogen werden. Optimalerweise ist die abgezogene Oberfläche mit der obersten H-Profilkante, d.h. des oberen Profilsegments, ebengleich. Danach zieht man in die Backform eine großflächige Diffusionssperre ein und backt die Platte mit erforderlichem Druck und der erforderlichen Temperatur. Nach dem Backen wird die großformatige Platte um die Kanten gesäumt und auf die Montagemaße von beispielsweise 1.200 mm x 800 mm zugeschnitten.

Der Begriff "Platte" im Zusammenhang mit der Herstellung bezieht sich hier beispielsweise auch auf die bereits erwähnte Systemplatte, bei der mehrere thermisch leitende Platten als Module zu einer großen Platte zusammengesetzt werden, welche wiederum durch Modultrennlinien in die kleineren Module untertrennt bzw. zugeschnitten werden kann.

Für eine weitere Plattenkonfektion kann beispielsweise rückseitig die Diffusionssperre im Bereich des oberen Profilsegments aufgeschnitten werden, die Silikonschaumeinlage dort entfernt und die obere Wärmeleitschiene mittels Klebers montiert werden, d.h. die obere Wärmeleitfläche.

Fig. 3B zeigt die Profilvorrichtung 28 in dem ersten Zustand 32 in der rechten Hälfte und in dem zweiten Zustand 36 in der linken Hälfte. In der linken Hälfte sind neben der Profilvorrichtung 28 auch noch ein auf der Unterseite vorgesehenes Element (erste Wärmeleitfläche 66, siehe weiter unten) und ein auf der Oberseite vorgesehenes Element (zweite Wärmeleitfläche 68, siehe ebenfalls weiter unten) gezeigt, wobei die beiden Wärmeleitflächen, bzw. flächigen Elemente mit Vorsprüngen 39 in Aufnahmeöffnungen der Profilvorrichtung 28 eingreifen können. In der linken Hälfte ist für den zweiten Zustand 36 das obere Element, d.h. die zweite Wärmeleitfläche 68 sowohl in dem fertigen Zustand, als auch darüber angeordnet gezeigt, zur Verdeutlichung des Anfangszustands, und damit auch zur Verdeutlichung des Anpassungsspektrums, bzw. der Anpassbarkeit der Profilvorrichtung 28.

Fig. 4A zeigt einen Querschnitt durch ein Beispiel der thermisch leitenden Platte 10. Die Wärmeleitelemente 16 weisen die Profilvorrichtung 28 auf, welche in diesem Beispiel mit einem Verbindungssegment 170 ausgebildet ist. Das Verbindungssegment 170 weist ein S-förmiges Profil auf, das in Bezug auf die Plattenrichtung liegend angeordnet ist. Das S-förmige Profil bildet eine erste Aufnahme 172, in die ein erstes Stegsegment 174 eingeschoben ist. Außerdem ist eine zweite Aufnahme 176 ausgebildet, in die ein zweites Stegsegment 178 eingeschoben ist. Das erste Stegsegment 172 ragt von der ersten Oberfläche 18 in die erste Aufnahme 172 mit einem ersten Einsteckmaß 180 hinein, und das zweite Stegsegment 178 ragt von der zweiten Oberfläche 20 in die zweite Aufnahme 176 zweiten Einsteckmaß 182 hinein. Das erste Stegsegment 174 steht mit einem ersten Stegsegmentmaß 184 von einer in Richtung der ersten Oberfläche verlaufenden ersten Basis 188 ab. Das zweite Stegsegment 178 steht mit einem zweiten Stegsegmentmaß 186 von einer in Richtung der zweiten Oberfläche verlaufenden zweiten Basis 190 ab. In Richtung der Platte ist eine Vielzahl von Verbindungssegmenten und Stegsegmenten vorgesehen. Die in Fig. 4A gezeigte Konfiguration ermöglicht eine thermische leitende Platte 10 in dem bereits erwähnten ersten Zustand 32 mit der ersten Höhe 34.

In Fig. 4B ist eine Konfiguration gezeigt, bei der die thermische leitende Platte 10 den dem bereits erwähnten zweiten Zustand 32 mit der zweiten Höhe 38 aufweist. Die ersten Stegsegmente 172 ragen nun mit einem weiter eingeschobenen ersten Einsteckmaß 180' in die erste Aufnahme 172 hinein, und die zweiten Stegsegmente 178 ragen mit einem weiter eingeschobenen zweiten Einsteckmaß 182' in die zweite Aufnahme 176 hinein. Die beiden Stegsegmente 172, 176 überlappen sich mit einem Überlappungsmaß 192.

In einer weiteren Variante ist vorgesehen, dass Stegsegmente nur von einer Seite in die Platte hineinragen, und das Verbindungssegment ist als halbes S-Profil ausgebildet und auf der gegenüberliegenden Seite vorgesehen.

In Fig. 4C ist ein Ausschnitt gezeigt, bei dem die ersten Stegsegmente 174 als Laschen 194 ausgebildet sind, die von einem thermisch leitenden Plattenwerkstoff 196 abstehen, der im Bereich der ersten Oberfläche 18 angeordnet ist. Die Laschen 194 stehen in Richtung der Plattenmitte ab und sind als Flächensegmente 198 des Plattenwerkstoffs 196 vorgesehen.

Beispielsweise ist der Plattenwerkstoff 196 eine Metallfläche, z.B. aus Aluminium oder einem anderen Leichtmetall/-Legierung, und die Flächensegmente 198 sind durch Ausstanzen und anschließendes Abwinkeln ausgebildet. Dazu ist in Fig. 4D eine Aufsicht eines Herstellungsschrittes gezeigt, bei dem die Laschen 194 bereits ausgestanzt sind und Fugen 199 vorhanden sind. Die Laschen 194 befinden sich aber noch in der Fläche, wie dies auch in Fig. 4E in einem Querschnitt zu sehen ist. Anschließend erfolgt ein Umkanten oder Umbiegen um eine Biegelinie 197.

Die Laschen können auch auf andere Weise aus dem Plattenmaterial gefertigt werden, z.B. durch Laser-Trennverfahren. Statt eines Metallwerkstoffs kann auch ein anderes entsprechend wärmeleitendes Material vorgesehen sein, z.B. ein Kompositwerkstoff. Je nach Material kommen andere Schritte zur Anwendung, um die Laschen vorzusehen.

Fig. 4C bis 4E zeigen die Ausbildung der Stegsegmente beispielhaft für die ersten Stegsegmente 174. In einem weiteren Beispiel sind auch die zweiten Stegsegmente 178 entsprechend ausgebildete Laschen.

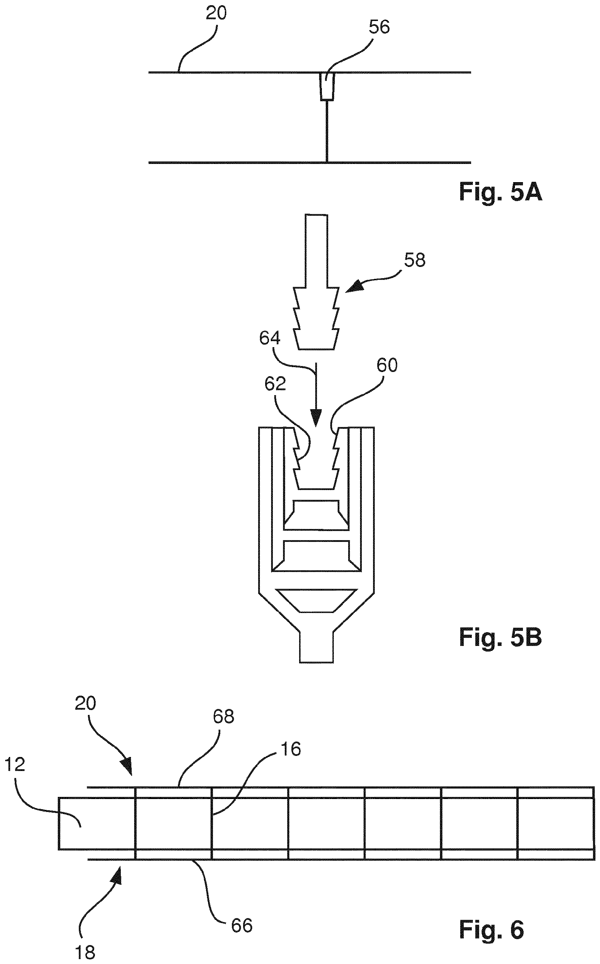

In Fig. 5A ist in einem abgewandelten Beispiel in einem Querschnitt gezeigt, dass vorgesehen sein kann, dass die Profilvorrichtungen an der zweiten Oberfläche 20 der Platte Öffnungen 56 aufweisen können, um hier Befestigungselemente (in Fig. 5B nicht näher gezeigt) einsetzen zu können.

Gemäß dem in Fig. 5B gezeigten abgewandelten Beispiel sind die Öffnungen 56 zum Einsetzen eines Säbelzahnschwert- oder Sägezahnschwertprofils 58 ausgebildet, wobei die Profilsegmente, d.h. das obere Profilsegment, in Fig. 5B mit Bezugsziffer 60 gekennzeichnet, mit seitlichen Verrastungen (nicht näher dargestellt) ausgebildet sein können, die ein Zusammenschieben in Richtung der Plattendicke ermöglichen, jedoch ein Auseinanderziehen in der Gegenrichtung verhindern. Das oberste Profilsegment 60 ist zum Einsetzen eines Halteelements ausgebildet, beispielsweise mit einer passenden Kontur 62, so dass sich das Halteelement mit dem Sägezahnschwert-Profil 58 in Pfeilrichtung 64 in das oberste Profilsegment 60 einrasten lässt.

Gemäß dem in Fig. 6 gezeigten Ausführungsbeispiel kann auf der ersten Oberfläche 18 die bereits erwähnte erste Wärmeleitfläche 66 auf dem Plattenwerkstoff 12 angeordnet sein, die mit den Wärmeleitelementen 16 thermisch verbunden ist. Alternativ dazu oder ergänzend kann auch auf der der zweiten Oberfläche 20 eine zweite Wärmeleitfläche 68 vorgesehen sein, bzw. auf dem Plattenwerkstoff angeordnet sein, die mit den Wärmeleitelementen 16 thermisch verbunden ist und die mit einer Wärme- oder Kühlvorrichtung (nicht dargestellt in Fig. 6) verbunden werden kann.

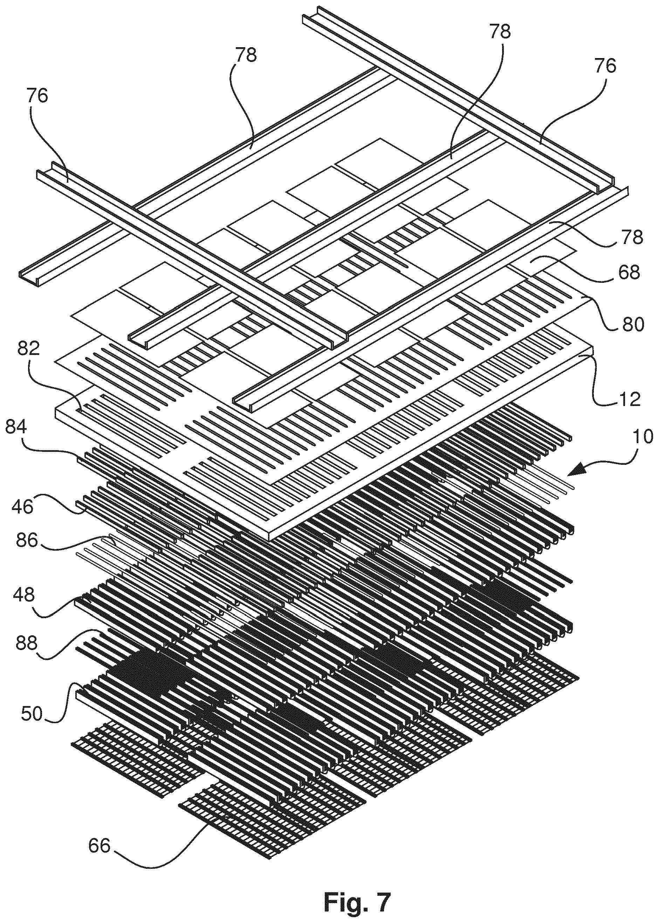

In Fig. 7 ist in einer Explosionsdarstellung ein weiteres Ausführungsbeispiel gezeigt. Im Folgenden wird der Aufbau von oben nach unten beschrieben, d.h. von der dem Raum abgewandten Seite zum Raum hin.

In Fig. 7 ist dazu z.B. ein Trägerraster, bzw. ein Trägerrost 76 gezeigt, der auch als Grundrost bezeichnet werden kann, und der zur Abhängung der thermisch leitenden Platte 10 vorgesehen ist. Als nächstes sind die bereits erwähnten zweiten Wärmeleitflächen 68 vorgesehen, die auch als obere Wärmetauschplatten bezeichnet werden. Der Vollständigkeit halber sei noch erwähnt, dass neben dem Trägerrost 76 auch ein Feinraster, bzw. Feinrost 78 vorgesehen ist, der zur Verschraubung der thermisch leitenden Platten, bzw. der Systemplatten vorgesehen ist. Der Feinrost 78 weist einen geringeren Achsabstand auf als der Trägerrost 76.

Unterhalb der zweiten Wärmeleitfläche 68 ist eine Diffusionssperre 80 gezeigt, mit der der Plattenwerkstoff 12, beispielsweise in Form von einer Blähglasschicht, abgedeckt ist. Der Plattenwerkstoff 12 ist mit einer Vielzahl von Schlitzen 82 dargestellt, da sich in diesen die bereits erwähnten Profilvorrichtungen 28 befinden.

Die Profilvorrichtungen 28 sind ebenfalls in ihren einzelnen Segmenten dargestellt, so dass in Fig. 7 zunächst eine Vielzahl von den bereits erwähnten ersten Profilen 46 gezeigt ist, in welche als in das Füllmaterial 54 eingelegte erste Softprofile 84 vorgesehen sind. Darunter ist eine Vielzahl der bereits erwähnten zweiten Profile 48 gezeigt, bei denen ebenfalls als das Füllmaterial 50 eine Vielzahl von zweiten Softprofilen 86 vorgesehen ist. Schließlich ist auch noch eine Vielzahl der dritten Profile 50 gezeigt, welche ebenfalls mit dem Füllmaterial 54 gefüllt sind, wozu eine Vielzahl von dritten Softprofilen 88 gezeigt sind. Auf der Unterseite befindet sich schließlich noch die erste Wärmeleitfläche 66. Eine Beschichtung, wie z.B. eine Putzschicht oder Farbschicht, kann ebenfalls noch vorgesehen sein, wobei diese nicht näher dargestellt ist.

Das erste Profil 46 wird auch als H-Oberprofil bezeichnet, und das zweite Profil 48 als H-Mittelprofil, sowie das dritte Profil 50 als feste U-Gabel. Die erste Wärmeleitfläche 66 wird auch als untere Wärmetauschplatte bezeichnet.

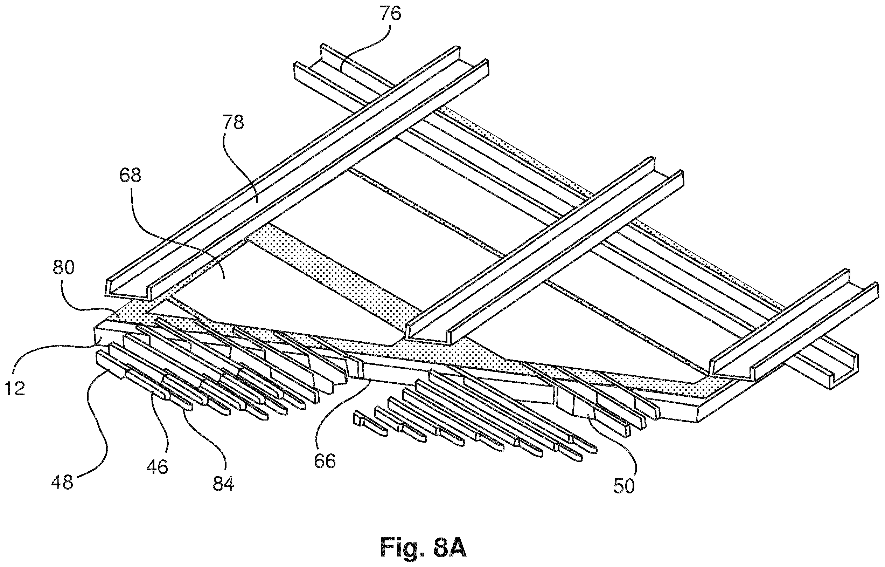

In Fig. 8A ist die Darstellung aus Fig. 7 ineinandergeschoben, bzw. ineinandergesetzt dargestellt, wobei zur besseren Übersicht einzelne Segment abgeschnitten dargestellt sind, bzw. einzelne Schichten. Da die gleichen Elemente mit gleichen Bezugsziffern versehen sind, soll auf Fig. 7 nicht näher eingegangen werden. Es sei lediglich darauf hingewiesen, dass nicht alle der bereits erwähnten Softprofile gezeigt sind, da sich diese im fertigen Plattenzustand, d.h. nach der Plattenherstellung, in einem teilweise sehr stark komprimierten Zustand befinden.

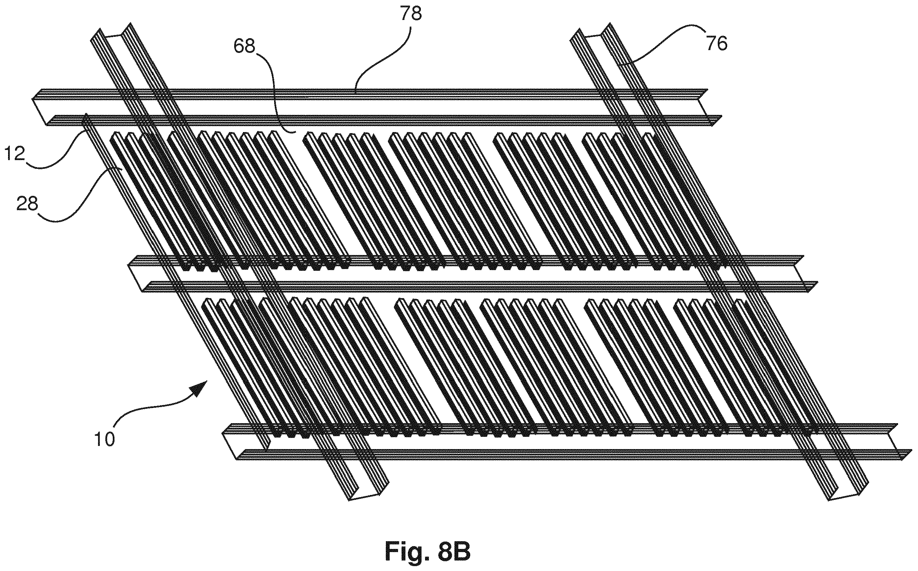

In Fig. 8B ist die thermisch leitende Platte 10 aus Fig. 8, bzw. die Platte 10 gemäß der Explosionsdarstellung aus Fig. 7, in einer weiteren isometrischen Darstellung gezeigt. Hierbei sind die einzelnen Elemente als sogenannte Liniendarstellung gezeigt, bei der die Flächen transparent gezeigt sind, um den Aufbau besser zeigen zu können. Die thermisch leitende Platte 10 ist, wie bereits in Fig. 8 beschrieben, im Zusammenhang mit einem Trägerrost 76 und dem Feinrost 78 gezeigt.

Zusätzlich ist in Fig. 9 ein vergrößerter Schnitt durch eine thermisch leitende Platte gezeigt, wobei hier ebenfalls die gleichen Bezugszeichen verwendet werden.

Fig. 10 zeigt einen Querschnitt durch ein Ausführungsbeispiel für die erste Wärmeleitfläche 66, bei der auf der der Platte zugewandten Seite eine Vielzahl von Vorsprüngen 90 vorgesehen ist, die jeweils in eine entsprechende Ausnehmung des dritten Profils 50, bzw. der festen U-Gabel eingesetzt werden können, um die Wärmeleitfläche zu befestigen.

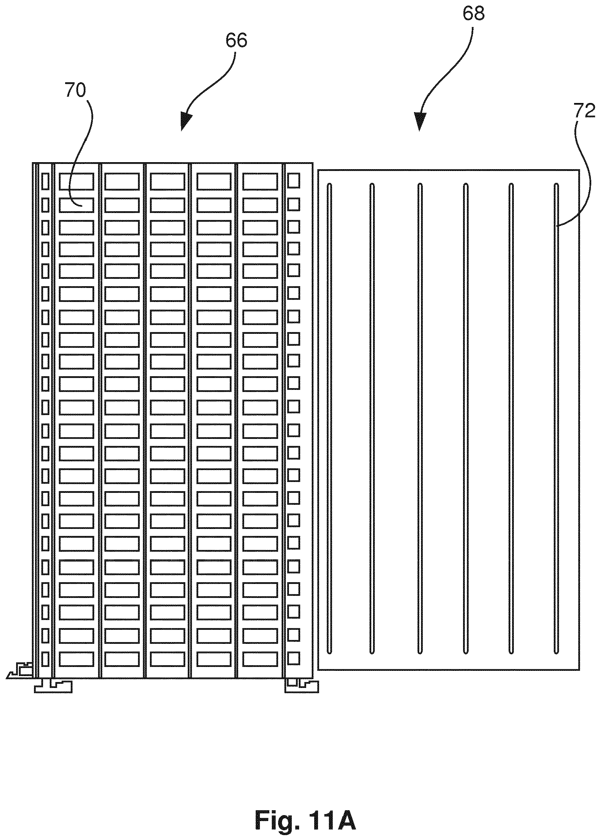

Fig. 11A zeigt in einer gemeinsamen Draufsicht in der linken Hälfte ein Ausführungsbeispiel für die erste Wärmeleitfläche 66 und in der rechten Hälfte ein Ausführungsbeispiel für die zweite Wärmeleitfläche 68.

Wie aus der Gegenüberstellung ersichtlich ist, weist die erste Wärmeleitfläche 66 beispielsweise eine Vielzahl von Öffnungen 70 auf, um den auf die Platte auftreffenden Schall an den Plattenwerkstoff durchzulassen. Im Gegensatz dazu ist die zweite Wärmeleitfläche, die auf der dem Raum abgewandten Seite vorgesehen ist, lediglich mit schlitzförmigen Öffnungen 72 ausgebildet, durch welche Befestigungselemente, wie beispielsweise das Sägezahnschwertprofil 58 mit den schienenartigen Wärmeleitelementen verbunden werden können.

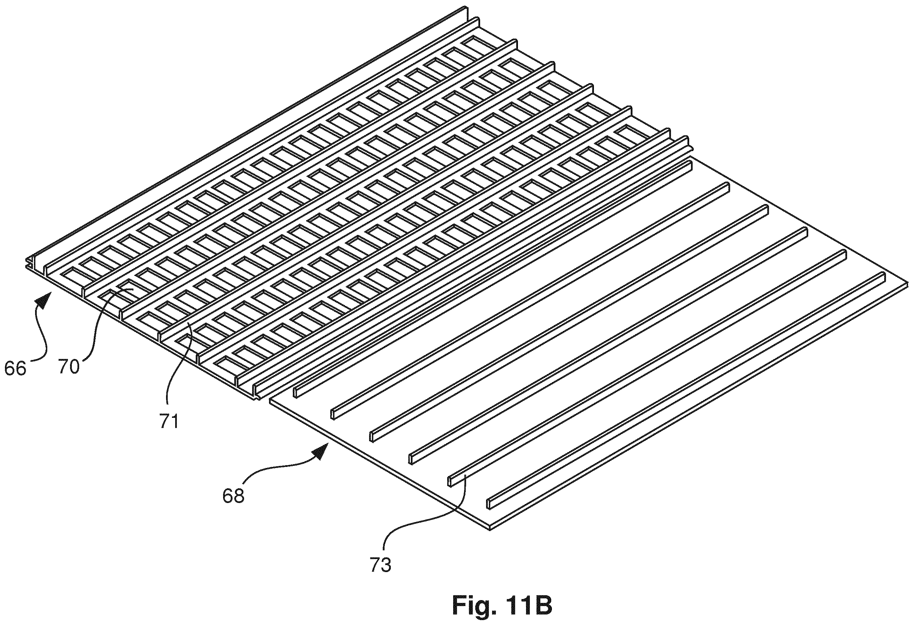

In Fig. 11B sind die beiden Wärmeleitflächen aus Fig. 11A in einer Isometrie gezeigt, bei der die Elemente in einer Liniendarstellung gezeigt sind, bei welcher die Flächen transparent dargestellt sind, um den strukturellen Aufbau besser erkennen zu können. In der linken vorderen Hälfte ist die erste Wärmeleitfläche 66 gezeigt, bei der die Vielzahl von Öffnungen 70 vorgesehen sind, um Schall an den Plattenwerkstoff durchzulassen. Gut erkennbar sind außerdem rippenartige Vorsprünge 71 zur Verbindung mit den anpassbaren Profilvorrichtungen 28. In der rechten hinteren Hälfte ist die zweite Wärmeleitfläche 68 gezeigt, bei welcher auf der Unterseite weitere rippenartige Vorsprünge 73 gezeigt sind, die in entsprechende Öffnungen der Profilvorrichtungen 28 eingreifen können.

Die beiden Wärmeleitflächen können auch mit anders ausgebildeten Öffnungen versehen sein, insbesondere kann die zweite Wärmeleitfläche 68 ebenfalls Öffnungen aufweisen. Bei der ersten Wärmeleitfläche 66, d.h. der dem Raum zugewandten Wärmeleitfläche können auch kleinere bzw. größere Öffnungen vorgesehen sein, beispielsweise auch als Gitter ausgebildete Flächen zwischen den Vorsprüngen 71.

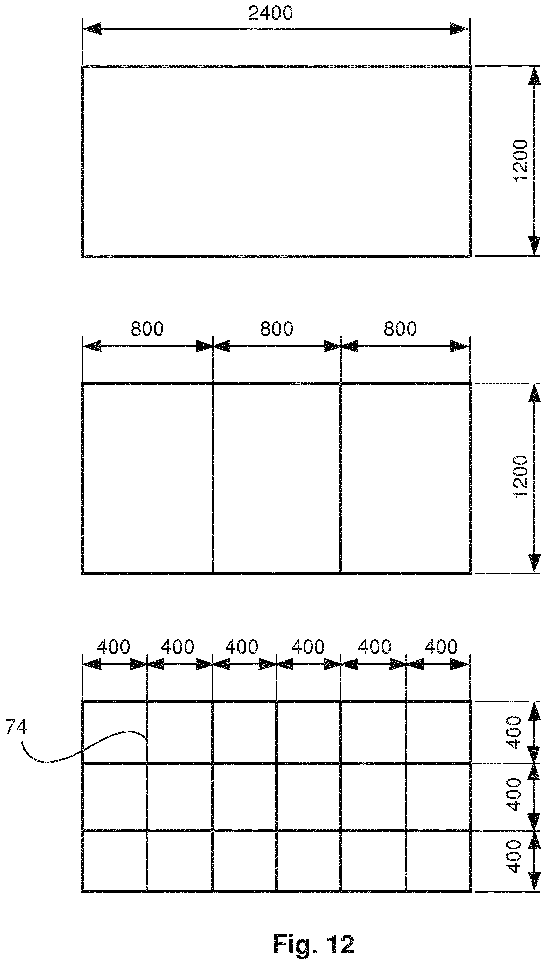

Gemäß einem weiteren Ausführungsbeispiel, das in Fig. 12 näher erläutert wird, ist eine Systemplatte vorgesehen, bei der virtuelle Modultrennlinien 74 vorgesehen sind, mit welchen ein Vielzahl von Modulen abgebildet werden, wobei der Verlauf der Wärmeleitelemente (in Fig. 12 nicht näher gezeigt) in Übereinstimmung mit den Modultrennlinien unterbrochen ist, wobei die Enden der Wärmeleitelemente einen Sicherheitsabstand zu den Modultrennlinien aufweisen.

Beispielsweise beträgt die Modulgröße 400 mm x 400 mm, und als Systemplattengröße können z.B. 2.400 mm x 1.200 mm für die Systemplatte vorgesehen sein. Daraus lassen sich dann unterschiedlich große Platten bilden, wie dies in Fig. 12 in der Mitte beispielsweise für drei 800 mm x 1.200 mm große Platten gezeigt ist.

Durch eine Rasterung von beispielsweise minimal 400 x 400 mm können unterschiedliche Dimensionen einer thermisch aktivierbaren Fläche ermöglicht werden. Durch die Modulunterteilung einer Systemplatte kann beispielsweise auch eine Montage von Kleinelementen wie beispielsweise Sprinkler, Feuermelder etc. im Bereich der Profilunterkanten erfolgen. Eine Durchführung von beispielsweise Pendel-, Seil- und Kabeldurchführungen kann ebenfalls innerhalb der thermisch aktivierbaren Fläche vorgesehen werden.

Gemäß der Erfindung ist vorgesehen, eine fugenlos geschlossene Oberfläche zur Verfügung zu stellen, die neben der akustischen Eigenschaften, d.h. der akustisch dämpfenden Wirkung, auch eine gute Kühlleistung zur Verfügung stellt, sowie auch eine ebenfalls mögliche Wärmeleistung.

Gemäß einem weiteren Ausführungsbeispiel ist der Plattenwerkstoff schallabsorbierend. Beispielsweise kann die dem Raum zugewandte Seite mit einer Endbeschichtung versehen werden, z.B. verputzt oder mit einer Farbschicht beschichtet werden, wobei Die Beschichtung, z.B. der Putz oder die Farbe, möglichst schalldurchlässig ausgebildet ist.

Gemäß der Erfindung ist ein thermoaktives Deckenverkleidungssystem 100 vorgesehen, das wenigstens eine thermisch leitende Platte 10 nach einem der vorhergehenden Ausführungsbeispiele, bzw. Kombinationen davon, aufweist, sowie eine Wärme- oder Kühlvorrichtung 110. Die Wärme- oder Kühlvorrichtung ist dabei auf der Seite der zweiten Oberfläche 20 vorgesehen, und die Wärme- oder Kühlvorrichtung 110 ist mit den Wärmeleitelementen 16 der thermisch leitenden Platte 10 thermisch verbunden.

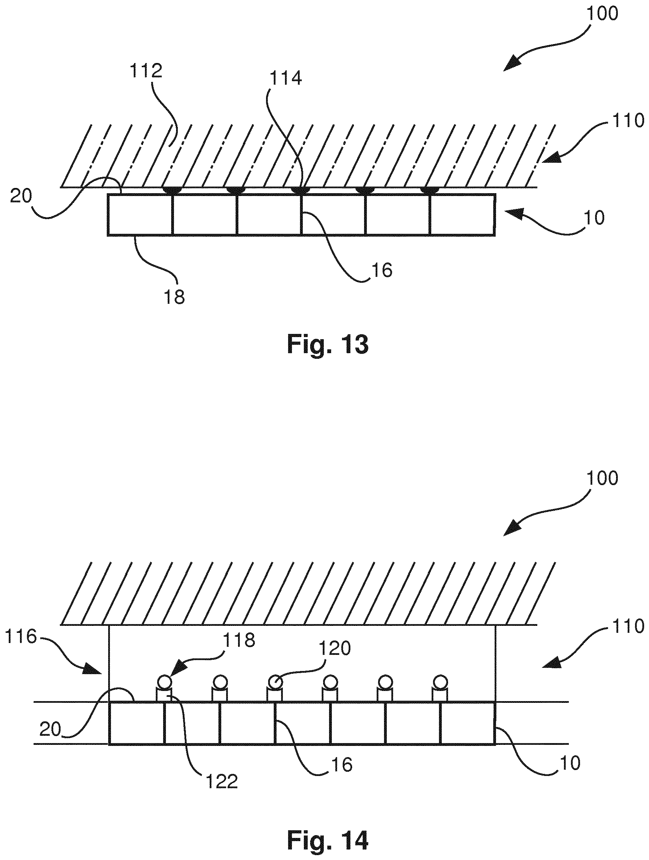

In Fig. 13 ist beispielsweise die Wärme- oder Kühlvorrichtung 110 als thermisch aktivierbare Bauteilmasse 112 ausgebildet. Die Bauteilmasse 112 umfasst zum Beispiel eine massive Wand- oder Deckenkonstruktion, z.B. eine Betonwand oder Betondecke. Auf der zweiten Oberfläche 20 können beispielsweise Kopplungselemente 114 vorgesehen sein, um die Wärmeleitelemente 16 noch besser mit der thermisch aktivierbaren Bauteilmasse 112 zu koppeln. Die thermisch leitende Platte 10 kann dabei beispielsweise auch mittels der Kopplungselemente 114 an der Wand- bzw. Deckenkonstruktion gehalten sein.

In Fig. 14 ist ein Ausführungsbeispiel des thermoaktiven Deckenverkleidungssystems 100 gemäß der vorliegenden Erfindung gezeigt, bei dem die Wärme- oder Kühlvorrichtung 110 eine Leitungseinrichtung 116 für ein Heiz- oder Kühlmedium aufweist, wobei die Leitungseinrichtung eine Vielzahl 118 von Leitungen 120 aufweist. Dazu können beispielsweise auf der zweiten Oberfläche 20 der thermisch leitenden Platte 10 Leitungskopplungselemente 122 vorgesehen sein, um die Leitungen mit den Wärmeleitelementen 16 thermisch zu verbinden.

Mit Bezug auf Fig. 13 und Fig. 14 sei daraufhingewiesen, dass gemäß einer weiteren Ausführungsform der Erfindung auch eine Kombination vorgesehen ist, z.B. Heiz- oder Kühlleitungen, die in eine Bauteilmasse eingelassen sind, so dass beide Prinzipien parallel zum verbesserten Wärmetransport vorgesehen sein können.

Die mehrteiligen Profilsegmente können auch für andere Plattenwerkstoffe verwendet werden als die beschriebene Variante mit Blähglasgranulat.

Beispielsweise kann ein Plattenwerkstoff vorgesehen sein, der bei dem Herstellungsvorgang sein Volumen verändert, indem die Plattendicke sich vergrößert. Auch für diesen Fall können die in der Höhe anpassbaren Profilvorrichtungen vorgesehen sein, wobei dann statt dem Zusammendrücken ein Auseinanderziehen der Profilsegmente vorgesehen ist. Dazu können beispielsweise die äußeren Profilsegmente an einer äußeren Schicht, beispielsweise den Wärmeleitflächen festgelegt sein, um beim Auseinanderquellen beispielsweise eine entsprechende Längenanpassung zu ermöglichen.

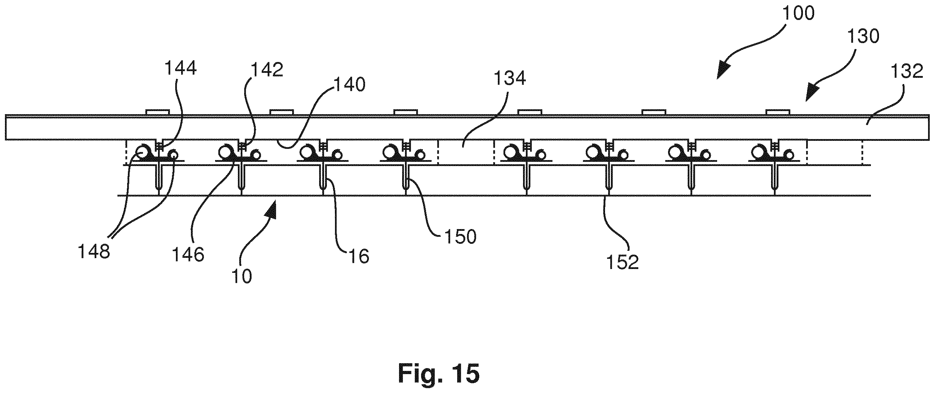

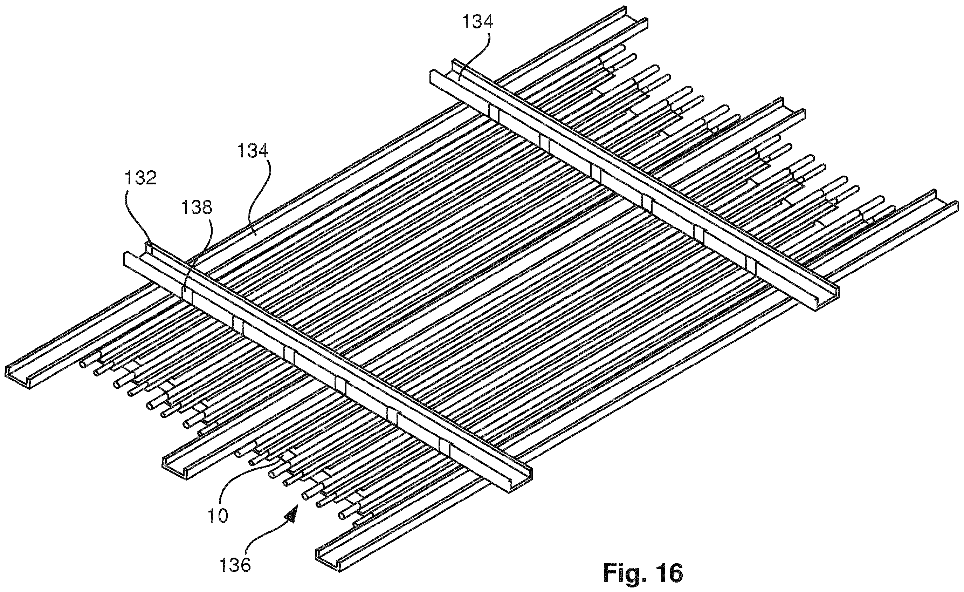

Fig. 15 zeigt ein weiteres Beispiel für ein thermoaktives Deckenverkleidungssystem 100, bei dem thermisch leitende Platten 10 an einer Tragkonstruktion 130 befestigt sind, beispielsweise als abgehängte Deckenplatten. Die thermisch leitenden Platten 10 können selbstverständlich aber auch als vorgesetzte Wandverkleidung ausgeführt werden. Die Tragkonstruktion 130 weist primäre Tragelemente 132 auf, die in Fig. 16 im Zusammenhang mit sekundären Tragelementen 134 zu sehen sind (siehe auch der Trägerrost 76, bzw. der Feinrost 78 in Fig. 7). Beispielsweise können die primären Tragelemente 132 über längenverstellbare Befestigungselemente mit strukturellen Bauteilen, wie beispielsweise einer Deckenplatte, verbunden werden. Dadurch lassen sich die primären Tragelemente ausrichten. Die sekundären Tragelemente 134 sind an den Kreuzungspunkten mit den primären Tragelementen 132 verbunden und dienen der Montage der thermisch leitenden Platte 10, beispielsweise durch Schrauben oder Klebeverbindungen.

Zusätzlich kann an den primären Tragelementen 132 auch noch ein Rohrleitungssystem 136 abgehängt werden, wie dies durch seitliche umgreifende Halteelemente 138 angedeutet ist. Diese Halteelemente 138 umgreifen teilweise die Profile der primären Tragkonstruktion in Form der primären Tragelemente 132 und sind am unteren Ende mit einer parallel verlaufenden Profilschiene 140 verbunden, bei der Öffnungen 142 in Vorsprüngen vorgesehen sind, in welche zapfenartige Verbindungselemente 144 eingreifen können, die wiederum mit clipförmigen Halteschienen 146 zur Aufnahme von verschieden dimensionierten Leitungen 148 verbunden sind.

Alternativ und ergänzend kann aber auch vorgesehen sein, dass die Halteschienen 146 zur Aufnahme der Rohrleitungen 148 mit der thermisch leitenden Platte 10 verbunden sind.

Außerdem ist auch vorgesehen, dass die thermisch leitende Platte 10 über die Halteschienen für die Rohrleitungen mit der primären Tragkonstruktion 132 verbunden sind, so dass auf die sekundären Tragelemente 134 verzichtet werden kann (nicht näher gezeigt).

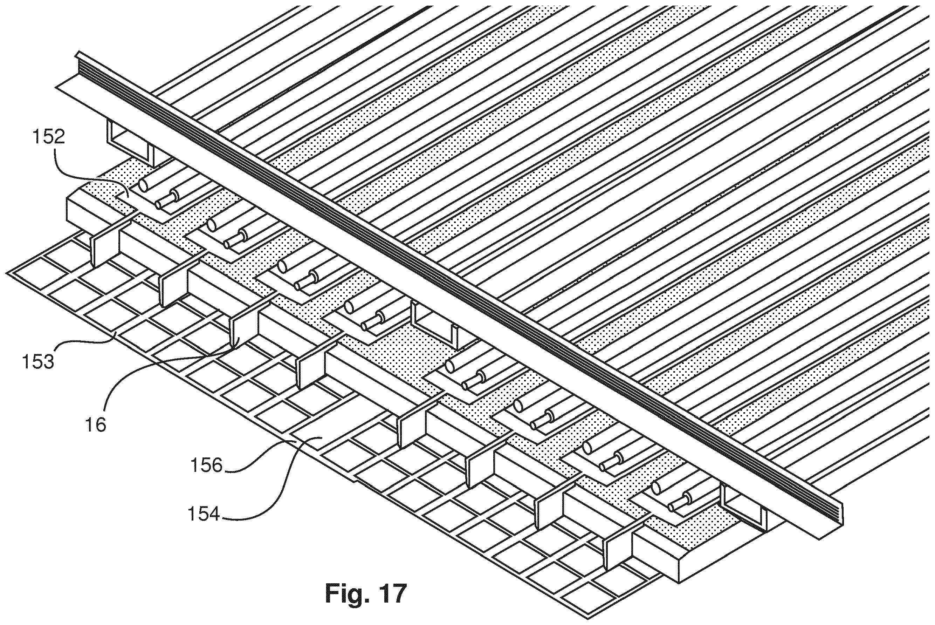

Die thermisch leitende Platte 10 ist mit einer Vielzahl der eingelassenen Wärmeleitelemente 16 gezeigt. Die Wärmeleitelemente 16 sind beispielsweise ein einstückiges Profil, das sich von der Unterseite, d.h. der dem Raum zugewandten Seite bis zur Rückseite durchgehend erstreckt und einen Schlitz 150 aufweist, in welchen ein Steg einer Wärmeleitfläche 152, z.B. als Wärmetauschplatte, eingreifen kann, wobei sich die Wärmeleitfläche 152 auf der Rückseite derart erstreckt, dass hierauf die Halteschienen 146 zur Aufnahme der Rohrleitungen aufgelegt werden können. Dadurch wird eine möglichst gute Wärmeleitung zwischen den Rohrleitungen und der Vorderseite der Platte erreicht. Auf der Vorderseite der Platte sind weitere Wärmeleitelemente in Form von gitterförmigen Stegen 153 vorgesehen, die in Fig. 17 erkennbar sind. Es sei darauf hingewiesen, dass die Darstellung in Figuren 16 und 17 zur besseren Lesbarkeit als Schichtmodelle mit versetzt endenden Schichten gezeigt sind. Selbstverständlich ist vorgesehen, dass sich der Plattenwerkstoff bis zur Vorderkante der gitterförmigen Stege 153, bzw. noch darüber hinaus erstreckt, was ebenfalls auf die Wärmeleitelemente 16 zutrifft.

Die gitterförmigen Stege 153 können mit Unterbrechungen 154 ausgeführt sein, um hier eine mögliche Trennlinie vorzusehen, um die thermisch leitende Platte an unterschiedliche Maße anpassen zu können. Dazu muss dann lediglich der verbindende Steg, mit Bezugszeichen 156 gezeigt, durchtrennt werden, und im weiteren Verlauf einer möglichen Schnittlinie sind dann keinerlei wärmeleitende Elemente mehr zu durchtrennen, die vorzugsweise aus Metall bestehen.

Die Stege sind in einem Beispiel als einteilige Stege vorgesehen. Die Stege sind in einem anderen Beispiel als mehrteilige Stege vorgesehen, z.B. als zweiteilige oder dreiteilige Stege.

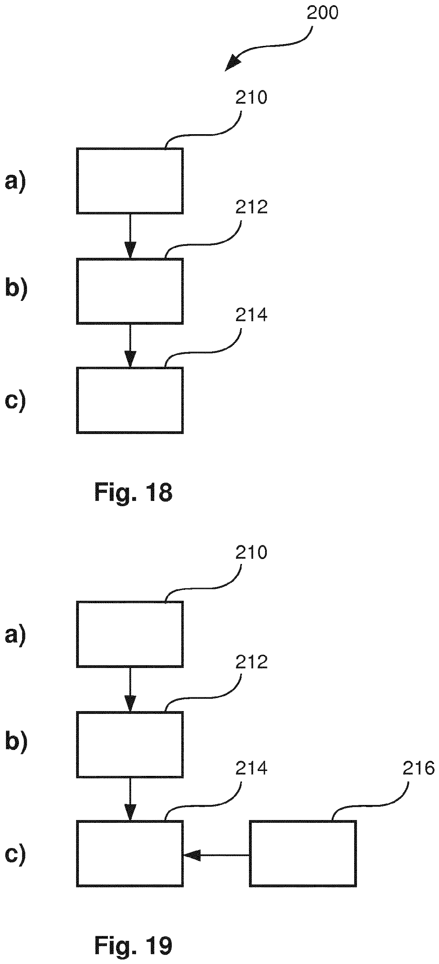

Gemäß der Erfindung ist auch ein Verfahren 200 zur Herstellung einer thermisch leitenden Platte vorgesehen, dessen Schritte in Fig. 18 schematisch gezeigt sind. In einem ersten Schritt 210 erfolgt ein Einlegen wenigstens einer höhenveränderlichen Profilvorrichtung in eine Formvorrichtung als Wärmeleitelemente, wobei sich die Profilvorrichtung über wenigstens die Hälfte einer Plattenabmessung erstreckt, die beim Einlegen eine erste Höhe aufweist. In einem zweiten Schritt 212 ist ein Einbringen eines schüttfähigen Plattenwerkstoffs in einem Ausgangszustand mit einer ersten Höhe vorgesehen, wobei der Plattenwerkstoff einen geringeren Wärmedurchlassgrad aufweist als die Wärmeleitelemente. In einem dritten Schritt 214 erfolgt ein Umwandeln des Plattenwerkstoffs vom Ausgangszustand in einen Endzustand mit einer zweiten Höhe. Das Umwandeln umfasst dabei eine kontinuierliche Verringerung der Höhe. Die Profilvorrichtung nimmt während des Umwandelns kontinuierlich eine zweite Höhe an, die geringer als die erste Höhe ist. Außerdem ist vorgesehen, dass sich die Wärmeleitelemente wenigstens von der Nähe einer ersten Oberfläche bis zu einer zweiten Oberfläche erstrecken, wobei die erste und die zweite Oberfläche auf zwei verschiedenen Seiten der Platte vorgesehen sind, und wobei die erste Oberfläche eine einem Raum zuzuwendende Seite bildet. Die Wärmeleitelemente sind als in den Plattenwerkstoff eingelassene Stege ausgebildet, die sich in ihrer Länge über wenigstens die Hälfte der Plattenabmessung erstrecken. Außerdem sind die Wärmeleitelemente auf der zweiten Oberfläche mit einer Wärme- oder Kühlvorrichtung verbindbar.

Der erste Schritt 210 wird auch als Schritt a) bezeichnet, der zweite Schritt 212 als Schritt b) und der dritte Schritt 214 als Schritt c).

Gemäß einem weiteren Ausführungsbeispiel, das in Fig. 19 gezeigt ist, ist der Plattenwerkstoff ein Blähgranulat, und das Umwandeln im dritten Schritt 214 umfasst ein Zuführen 216 von Druck und Temperatur.

Gemäß einem weiteren Ausführungsbeispiel (nicht gezeigt) ist vorgesehen, dass eine Vielzahl von relativ dicht nebeneinander liegenden Wärmeleitelementen, beispielsweise als Wärmeleitstege ausgebildete Profilvorrichtungen, in Kombination mit einem akustisch wirksamen, nämlich akustisch dämpfendem Material vorgesehen ist, um diese beiden unterschiedlichen Funktionen abzudecken. Mit anderen Worten, es wird eine nicht nur thermisch aktivierbare Innenraumverkleidung vorgesehen, sondern eine darüber hinaus auch akustisch wirksame Fläche, bei der eine Schallreduktion durch Schallabsorption erfolgt. Dadurch lassen sich beispielsweise die thermisch leitenden Platten für Innenräume einsetzen, bei der es beispielsweise aufgrund der dort stattfindenden Nutzung zu einer Wärmebeaufschlagung kommt, was durch die erfindungsgemäße thermisch leitende Platte zumindest soweit reduziert wird, dass die Aufenthaltsqualität deutlich verbessert wird.

Gemäß der Erfindung ist vorgesehen, dass eine thermisch leitende Platte mit verbesserter Wärmetransportfähigkeit zur Verfügung gestellt wird, die auch mit anderen Systemen der Wärmezufuhr bzw. -abfuhr kombiniert werden kann. Dazu können auf der Rückseite beispielsweise unterschiedlich ausgebildete Rohrleitungssysteme, oder auch andere Systeme mit entsprechenden Kühlmedien vorgesehen sein, was durch eine möglichst flächig ausgebildete Wärmetauschplatte auf der Rückseite unterstützt wird, bei der zunächst kein genaues Raster festgelegt ist.

Neben dieser Variante ist gemäß einem weiteren Beispiel der Erfindung auch vorgesehen, dass die thermisch leitende Platte mit den eingelassenen Wärmeleitelementen Teil eines Systems ist, das in seinen Abmessungen und Rastermaßen aufeinander abgestimmt ist.

Durch die Trennung von Platte und Wärmezufuhr bzw. Wärmeabfuhr wird eine größere Flexibilität und Anpassbarkeit gewährleistet.

Eine höhere Flexibilität wird auch durch eine feingliedrige Teilbarkeit unterstützt, bei der thermisch leitende Platten zu einer Systemplatte mit Modultrennlinien zusammengesetzt sind. Dadurch wird auch der Vorplanungsaufwand reduziert, da an die Gegebenheiten vor Ort durch leichte Anpassungsarbeiten reagiert werden kann.

Gemäß einem weiteren Ausführungsbeispiel (nicht gezeigt) ist vorgesehen, eine Platte einer Innenraumverkleidung zur Verfügung zu stellen, die trotz eines akustisch wirksamen Plattenwerkstoffs mit eigentlich schlechten thermischen Leitwerten dennoch einen möglichst guten Wärmeaustausch ermöglicht, indem ein Transportweg für thermisch Ströme in beiden Richtungen von einer Plattenoberseite zur anderen zur Verfügung gestellt wird. Mit anderen Worten, erfindungsgemäß ist vorgesehen, dass die Maßnahmen zur Verbesserung der Wärmeleitfähigkeit nahezu keinen Einfluss auf die akustischen Eigenschaften des Plattenwerkstoffs haben, d.h. nur an denjenigen Stellen, an denen der Plattenwerkstoff durch die thermischen Wärmeleitelemente verdrängt, bzw. ersetzt wird.

Gemäß einem weiteren Ausführungsbeispiel können unterschiedliche Plattendicken realisiert werden, sowie auch unterschiedlicher Plattenwerkstoff zum Einsatz kommen. Durch unterschiedliche Wärmetauscher auf der Plattenrückseite lässt sich zudem eine hohe Kompatibilität auch mit anderen Systemen zur Verfügung stellen.

Als Wärmeleitfläche, Z.B. in Form eines plattenförmigen Wärmetauschers, kann an der Plattenunterseite, d.h. an der dem Raum zugewandten Seite, beispielsweise ein gelochtes Wärmeleitblech vorgesehen sein, welches die Wärme an der Plattenunterseite aufnimmt. Durch Wärmeleitung gelangt die thermische Energie vom unteren Wärmeleitblech beispielsweise in eine U-förmige Gabel und von hieraus in die weiteren eingesetzten Profile, wenn ein mehrteiliges Profil verwendet wird. Wenn von dem oberen Wärmeleitblech durch einen Pressvorgang ein Einstecken in das oberste Profilsegment erfolgt, wird auch hier eine thermische Weiterleitung durch die formschlüssige Verbindung ermöglicht.

Die Wärmeleitelemente in Form der eingelassenen Stege sind beispielsweise aus Metall, insbesondere Aluminium gefertigt.

Die Wärmeleitbleche auf den beiden Plattenseiten können ebenfalls aus Aluminium gefertigt sein. Das untere Wärmeleitblech wird beispielsweise für seine akustische Wirksamkeit vielfach gestanzt, d.h. um die akustische Wirksamkeit des Plattenwerkstoffs zu gewährleisten. Beispielsweise können die unteren Wärmeleitbleche auf eine Länge von 340 mm zugeschnitten sein, was beispielsweise einem freien Mittenabstand zwischen verschiedenen Schraubrosten entspricht. Dabei können zwei Segmente mittels Kupplungszapfen zu einer Einheit verbunden werden, um eine sogenannte kleinste teilbarer Einheit zu schaffen.

Das obere Wärmeleitblech kann beispielsweise auf 330 mm zugeschnitten sein und um die Kupplungszapfen verkürzt ausgebildet sein. Die Plattenkupplungszapfen könnten nach dem Pressvorgang nicht durch die Diffusionssperre in das Blähglasgranulat gedrückt werden. Außerdem kann kopfseitig ein Rand von 10 mm beidseitig von den Verbindungszapfen durch Fräsen gesäumt werden. Die Schaffung dieses Freiraums kann beispielsweise dazu verwendet werden, um bei der Montage des oberen Wärmeleitblechs mittels Koll-Kleber die durch die Zapfen verursachte Diffusionsverletzung wiederherzustellen.

Die oberhalb beschriebenen Ausführungsvarianten und Beispiele können in unterschiedlicher Art und Weise kombiniert werden. Insbesondere können auch Beispiele des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsvarianten und Beispiele beschrieben worden sind, auch in Kombination mit anderen Merkmalen oder Schritten anderer, oben beschriebener Ausführungsvariante und Beispiele verwendet werden können. Bezugszeichen in den Ansprüchen sind nicht als Einschränkung anzusehen.

## Patentansprüche

1. Thermisch leitende Platte (10) für eine vorgesetzte Innenraumverkleidung, aufweisend:
- einen Plattenwerkstoff (12); und
- eine Vielzahl (14) von eingelassenen Wärmeleitelementen (16);
wobei der Plattenwerkstoff (12) einen geringeren Wärmedurchlassgrad aufweist als die Wärmeleitelemente (16);
wobei sich die Wärmeleitelemente (16) wenigstens von der Nähe einer ersten Oberfläche (18) bis zu einer zweiten Oberfläche (20) erstrecken;
wobei die erste (18) und die zweite Oberfläche (20) auf zwei verschiedenen Seiten der Platte vorgesehen sind, und wobei die erste Oberfläche (18) eine einem Raum zuzuwendende Seite bildet;
wobei die Wärmeleitelemente (16) als in den Plattenwerkstoff (12) eingelassene Stege (22) ausgebildet sind, die sich in ihrer Länge über wenigstens die Hälfte der Plattenabmessung erstrecken; und
wobei die Wärmeleitelemente (16) auf der zweiten Oberfläche mit einer Wärme- oder Kühlvorrichtung verbindbar sind;
**dadurch gekennzeichnet, dass**
die Wärmeleitelemente (16) an unterschiedliche Plattendicken anpassbare Profilvorrichtungen (28) sind.

2. Thermisch leitende Platte nach Anspruch 1, wobei die Profilvorrichtungen (28) in einem ersten Zustand (32) eine erste Höhe (34) aufweisen und in einem zweiten Zustand (36) eine zweite Höhe (38) aufweisen, die geringer als die erste Höhe (34) ist; und wobei der Übergang vom ersten Zustand (32) in den zweiten Zustand (38) stufenlos ist.

3. Thermisch leitende Platte nach einem der Ansprüche 1 oder 2, wobei die Profilvorrichtungen (28) jeweils aus wenigstens zwei ineinander gesteckten Profilsegmenten (42, 44; 46, 48, 50) bestehen.

4. Thermisch leitende Platte nach Anspruch 1, 2 oder 3, wobei die Profilvorrichtungen (28) eine erste Aufnahme (158) aufweisen zum wenigstens teilweisen Aufnehmen eines ersten Stegsegments (160), und eine zweite Aufnahme (162) zum wenigstens teilweisen Aufnehmen eines zweiten Stegsegments (164);
wobei das erste Stegsegment (160) von der ersten Oberfläche (18) in die erste Aufnahme (158) hineinragt, und das zweite Stegsegment (164) von der zweiten Oberfläche (20) in die zweite Aufnahme (162); und
wobei die erste Aufnahme (158) mit der zweiten Aufnahme (162) thermisch gekoppelt ist und das erste Stegsegment (160) mit dem zweiten Stegsegment (164) thermisch verbindet.

5. Thermisch leitende Platte nach Anspruch 4, wobei die Stegsegmente als Laschen ausgebildet sind, die von einem thermisch leitenden Plattenwerkstoff, der im Bereich der ersten oder zweiten Oberfläche angeordnet ist, in Richtung der Plattenmitte abstehen; wobei die Laschen Flächensegmente des Plattenwerkstoffs sind, die von der Platte abstehen.

6. Thermisch leitende Platte nach einem der vorhergehenden Ansprüche, wobei wenigstens ein Teil der Profilsegmente (42, 44; 46, 48, 50) der Profilvorrichtung (20) im ersten Zustand Hohlräume (52) aufweist zum wenigstens teilweise Aufnehmen benachbarter Profilsegmente; und
wobei die Hohlräume (52) wenigstens teilweise mit einem in seinem Volumen veränderbaren Füllmaterial (54) gefüllt sind zur Abdichtung gegen eindringenden Plattenwerkstoff (12) bei der Herstellung.

7. Thermisch leitende Platte nach einem der vorhergehenden Ansprüche, wobei zur Verbesserung des thermischen Energieaustauschs:
a) auf der ersten Oberfläche (18) eine erste Wärmeleitfläche (66) auf dem Plattenwerkstoff (12) angeordnet ist, die mit den Wärmeleitelementen (16) thermisch verbunden ist; und/oder
b) auf der zweiten Oberfläche (20) eine zweite Wärmeleitfläche (68) auf dem Plattenwerkstoff (12) angeordnet ist, die mit den Wärmeleitelementen (16) thermisch verbunden ist, und mit welcher eine Wärme- oder Kühlvorrichtung verbindbar ist.

8. Thermisch leitende Platte nach einem der vorhergehenden Ansprüche, wobei der Plattenwerkstoff (12) schallabsorbierend ist; und
wobei die Platte auf der dem Raum zugewandten Seite mit einer Endbeschichtung beschichtbar ist.

9. Thermoaktives Deckenverkleidungssystem (100), aufweisend:
- wenigstens eine thermisch leitende Platte (10) nach einem der vorhergehenden Ansprüche; und
- eine Wärme- oder Kühlvorrichtung (110);
wobei die Wärme- oder Kühlvorrichtung (110) auf der Seite der zweiten Oberfläche (20) angeordnet ist;
wobei die Wärme- oder Kühlvorrichtung (110) mit den Wärmeleitelementen der thermisch leitenden Platte (10) thermisch verbunden ist; und wobei:
i) die Wärme- oder Kühlvorrichtung (110) als thermisch aktivierbare Bauteilmasse (112) ausgebildet ist; und/oder
ii) die Wärme- oder Kühlvorrichtung (110) eine Leitungseinrichtung (116) für ein Heiz- oder Kühlmedium aufweist; wobei die Leitungseinrichtung (116) eine Vielzahl (118) von Leitungen (120) aufweist.

10. Verfahren (200) zur Herstellung einer thermisch leitenden Platte, mit den folgenden Schritten:
a) Einlegen (210) wenigstens einer höhenveränderlichen Profilvorrichtung in eine Formvorrichtung als Wärmeleitelemente;
wobei sich die Profilvorrichtung über wenigstens die Hälfte einer Plattenabmessung fortlaufend erstreckt und beim Einlegen eine erste Höhe aufweist;
b) Einbringen (212) eines schüttfähigen Plattenwerkstoffs in einem Ausgangszustand mit einer ersten Höhe; wobei der Plattenwerkstoff einen geringeren Wärmedurchlassgrad aufweist als die Wärmeleitelemente;
c) Umwandeln (214) des Plattenwerkstoffs vom Ausgangszustand in einen Endzustand mit einer zweiten Höhe;
wobei das Umwandeln eine kontinuierliche Verringerung der Höhe umfasst;
wobei die Profilvorrichtung während des Umwandelns kontinuierlich eine zweite Höhe annimmt, die geringer als die erste Höhe ist; und
wobei sich die Wärmeleitelemente wenigstens von der Nähe einer ersten Oberfläche bis zu einer zweiten Oberfläche erstrecken; wobei die erste und die zweite Oberfläche auf zwei verschiedenen Seiten der Platte vorgesehen sind, und wobei die erste Oberfläche eine einem Raum zuzuwendende Seite bildet; wobei die Wärmeleitelemente als in den Plattenwerkstoff eingelassene Stege ausgebildet sind, die sich in ihrer Länge über wenigstens die Hälfte der Plattenabmessung erstrecken; und wobei die Wärmeleitelemente auf der zweiten Oberfläche mit einer Wärme- oder Kühlvorrichtung verbindbar sind.

11. Verwendung einer Platte nach einem der Ansprüche 1 bis 9 zum wenigstens teilweisen Umhüllen eines Innenraums; wobei die Wärmeleitelemente für den thermischen Energietransport zwischen Innenraum und einer Wärme- oder Kühlvorrichtung auf der dem Raum abgewandten Seite vorgesehen sind.

## Claims

1. A thermally conductive panel (10) for a placed-in-front interior lining comprising:
- a panel material (12); and
- a plurality (14) of recessed heat conducting elements (16);
wherein the panel material (12) comprises a lesser degree of heat passage than the heat conducting elements (16);
wherein the heat conducting elements (16) extend at least from the proximity of a first surface (18) to a second surface (20);
wherein the first (18) and the second surface (20) are provided on two different sides of the panel, and wherein the first surface (18) forms a side which is to be facing towards a room;
wherein the heat conducting elements (16) are configured as webs (22) recessed into the panel material (12), the webs in their length extending over at least one half of the panel dimension; and
wherein the heat conducting elements (16) can be connected to a heating or cooling device on the second surface;
**characterised in that**
the heat conducting elements (16) are profile devices (28), which can be adapted to different panel thicknesses.

2. The thermally conductive panel according to claim 1, wherein the profile devices (28), in a first state (32), comprise a first height (34) and in a second state (36) comprise a second height (38) which is less than the first height (34); and wherein the transition from the first state (32) into the second state (36) is stepless.

3. The thermally conductive panel according to one of claims 1 or 2, wherein the profile devices (28) respectively consists of at least two profile segments (42, 44; 46, 48, 50) plugged into each other.

4. The thermally conductive panel according to claim 1, 2 or 3, wherein the profile devices (28) comprise a first receptacle (158) for at least partially receiving a first web segment (160), and a second receptacle (162) for at least partially receiving a second web segment (164);
wherein the first segment (160) protrudes from the first surface (18) into the first receptacle (158), and the second web segment (164) protrudes from the second surface (20) into the second receptacle (162); and
wherein the first receptacle (158) is thermally coupled to the second receptacle (162) thermally connecting the first web element (160) to the second web element (164).

5. The thermally conductive panel according to claim 4, wherein the web segments are configured as tabs sticking out from a thermally conductive panel material arranged in the area of the first or second surface in direction of the panel centre; wherein the tabs are area segments of the panel material sticking out from the panel.

6. The thermally conductive panel according to one of the preceding claims, wherein at least a part of the profile segments (42, 44; 46, 48, 50) of the profile device (20) in the first state comprises cavities (52) for at least partially receiving adjacent profile segments; and
wherein the cavities (52) are filled at least partially with a filling material (54) the volume of which ca be changed, as a seal against the intrusion of panel material (12) during manufacture.

7. The thermally conductive panel according to one of the preceding claims, wherein the exchange of thermal energy is improved
a) by arranging a first heat conducting area (66) thermally connected to the heat conducting elements (16) on the panel material (12) on the first surface (18); and/or
b) by arranging a second heat conducting area (68) on the panel material (12) on the second surface (20), the second heat conducting area being thermally connected to the heat conducting elements (16) and connectable to a heating or cooling device.

8. The thermally conductive panel according to one of the preceding claims, wherein the panel material (12) is sound-absorbing; and
wherein the panel is suitable for coating with a final coating on the side facing the room.

9. A thermo-active ceiling lining system (100) comprising:
- at least one thermally conductive panel (10) according to one of the preceding claims; and
- a heating or cooling device (110);
wherein the heating or cooling device (110) is arranged on the side of the second surface (20);
wherein the heating or cooling device (110) is thermally connected to the heat conducting elements of the thermally conductive panel (10);
and wherein:
i) the heating or cooling device (110) is configured as a component mass (112) which can be thermally activated; and/or
ii) the heating or cooling device (110) comprises a line means (116) for a heating or cooling medium; wherein the line means (116) comprises a plurality (118) of lines (120).

10. A method (200) for manufacturing a thermally conductive panel, comprising the following steps:
a) placing (210) at least one height-adjustable profile device as heat conducting elements into a moulding device;
wherein the profile device continuously extends over at least one half of a panel dimension and comprises a first height when placed in position;
b) introducing (212) a pourable panel material in an original state with a first height; wherein the panel material comprises a lesser degree of heat passage than the heat conducting elements;
c) converting (214) the panel material from the original state into a final state with a second height;
wherein conversion comprises a continuous decrease in height;
wherein the profile device during conversion continues to assume a second height; and
wherein the heat conducting elements extend at least from the proximity of a first surface to a second surface; wherein the first and the second surfaces are provided on two different sides of the panel, and wherein the first surface forms a side to be facing a room; wherein the heat conducting elements are configured as webs let into the panel material, which in their length extend over at least half of the panel dimension; and wherein the heat conducting elements on the second surface can be connected to the heating or cooling device.

11. A use of a panel according to one of claims 1 to 9 for at least partly enveloping an inside room; wherein the heat conducting elements are provided for thermal energy transport between the inside room and a heating or cooling device on the side facing away from the room.

## Revendications

1. Plaque thermoconductrice (10) pour un revêtement de pièce intérieure avancé, présentant :
- un matériau de plaque (12) ; et
- une pluralité (14) d'éléments conducteurs de chaleur (16) encastrés ;
dans laquelle le matériau de plaque (12) présente un degré plus faible de conductibilité de chaleur que les éléments conducteurs de chaleur (16) ;
dans laquelle les éléments conducteurs de chaleur (16) s'étendent au moins depuis la proximité d'une première surface (18) jusqu'à une deuxième surface (20) ;
dans laquelle la première (18) et la deuxième surface (20) sont prévues sur deux faces différentes de la plaque, et dans laquelle la première surface (18) forme une face à tourner vers une pièce ;
dans laquelle les éléments conducteurs de chaleur (16) sont réalisés en tant que bandes (22) encastrées dans le matériau de plaque (12), lesquelles s'étendent, de par leur longueur, sur au moins la moitié de la dimension de la plaque ; et
dans laquelle les éléments conducteurs de chaleur (16) peuvent être reliés sur la deuxième surface à un dispositif de chauffage ou de refroidissement ;
**caractérisée en ce que**
les éléments conducteurs de chaleur (16) sont des dispositifs profilés (28) adaptables à différentes épaisseurs de plaque.

2. Plaque thermoconductrice selon la revendication 1, dans laquelle les dispositifs profilés (28) présentent, dans un premier état (32), une première hauteur (34) et dans un deuxième état (36), une deuxième hauteur (38) qui est inférieure à la première hauteur (34) ; et dans laquelle la transition du premier état (32) vers le deuxième état (36) est continue.

3. Plaque thermoconductrice selon l'une des revendications 1 ou 2, dans laquelle les dispositifs profilés (28) se composent respectivement d'au moins deux segments profilés (42, 44 ; 46, 48, 50) emboîtés l'un dans l'autre.

4. Plaque thermoconductrice selon la revendication 1, 2 ou 3, dans laquelle les dispositifs profilés (28) présentent un premier logement (158) pour le logement au moins partiel d'un premier segment de bande (160), et un deuxième logement (162) pour le logement au moins partiel d'un deuxième segment de bande (164) ;
dans laquelle le premier segment de bande (160) pénètre depuis la première surface (18) dans le premier logement (158), et le deuxième segment de bande (164) pénétrant depuis la deuxième surface (20) dans le deuxième logement (162) ; et
dans laquelle le premier logement (158) est couplé thermiquement au deuxième logement (162) et relie thermiquement le premier segment de bande (160) au deuxième segment de bande (164).

5. Plaque thermoconductrice selon la revendication 4, dans laquelle les segments de bande sont réalisés en tant que languettes, lesquelles sont en saillie par rapport à un matériau de plaque thermoconducteur qui est disposé dans la zone de la première ou deuxième surface, en direction du milieu de la plaque ; dans laquelle les languettes sont des segments de surface du matériau de plaque qui sont en saillie par rapport à la plaque.

6. Plaque thermoconductrice selon l'une des revendications précédentes, dans laquelle au moins une partie des segments profilés (42, 44 ; 46, 48, 50) du dispositif profilé (20) présente, dans le premier état, des espaces creux (52) pour loger au moins partiellement des segments profilés voisins ; et
dans laquelle les espaces creux (52) sont au moins partiellement remplis avec un matériau de remplissage (54) dont le volume peut varier pour l'étanchéification par rapport à du matériau de plaque (12) s'infiltrant lors de la fabrication.

7. Plaque thermoconductrice selon l'une des revendications précédentes, dans laquelle, pour l'amélioration de l'échange d'énergie thermique :
a) on dispose, sur la première surface (18), une première surface conductrice de chaleur (66) sur le matériau de plaque (12), laquelle est reliée thermiquement aux éléments conducteurs de chaleur (16) ; et/ou
b) dispose, sur la deuxième surface (20), une deuxième surface conductrice de chaleur (68) sur le matériau de plaque (12), laquelle est reliée thermiquement aux éléments conducteurs de chaleur (16) et à laquelle un dispositif de chauffage ou de refroidissement peut être relié.

8. Plaque thermoconductrice selon l'une des revendications précédentes, dans laquelle le matériau de plaque (12) est à absorption acoustique ; et
dans laquelle la plaque peut être revêtue d'un revêtement final sur la face tournée vers la pièce.

9. Système de revêtement de plafonds thermoactif (100), présentant :
- au moins une plaque thermoconductrice (10) selon l'une des revendications précédentes ; et
- un dispositif de chauffage ou de refroidissement (110) ;
dans lequel le dispositif de chauffage ou de refroidissement (110) est disposé sur la face de la deuxième surface (20) ;
dans lequel le dispositif de chauffage ou de refroidissement (110) est relié thermiquement aux éléments conducteurs de chaleur de la plaque thermoconductrice (10) ; et dans lequel :
i) le dispositif de chauffage ou de refroidissement (110) est réalisé en tant que masse de composant (112) activable thermiquement ; et/ou
ii) le dispositif de chauffage ou de refroidissement (110) présentant un dispositif de conduites (116) pour un agent de chauffage ou de refroidissement ; dans lequel le dispositif de conduites (116) présente une pluralité (118) de conduites (120).

10. Procédé (200) pour la fabrication d'une plaque thermoconductrice, avec les étapes suivantes :
a) la mise en place (210) d'au moins un dispositif profilé à hauteur variable dans un dispositif de mise en forme en tant qu'éléments de conduction de chaleur ;
dans lequel le dispositif profilé s'étend en continu sur au moins la moitié d'une dimension de plaque et présente une première hauteur lors de la mise en place ;
b) le chargement (212) d'un matériau de plaque en vrac, dans un état de départ, avec une première hauteur ; dans lequel le matériau de plaque présente un plus faible degré de conductibilité de chaleur que les éléments conducteurs de chaleur ;
c) la transformation (214) du matériau de plaque de l'état de départ à un état final avec une deuxième hauteur ;
dans lequel la transformation comprend une réduction continue de la hauteur ;
dans lequel, pendant la transformation, le dispositif profilé adopte en continu une deuxième hauteur qui est inférieure à la première hauteur ; et
dans lequel les éléments conducteurs de chaleur s'étendent au moins depuis la proximité d'une première surface jusqu'à une deuxième surface ; dans lequel la première et la deuxième surface sont prévues sur deux faces différentes de la plaque, et dans lequel la première surface forme une face tournée vers une pièce ; dans lequel les éléments conducteurs de chaleur sont réalisés en tant que bandes encastrées dans le matériau de plaque, lesquelles s'étendent de par leur longueur sur au moins la moitié de la dimension de plaque ; et dans lequel les éléments conducteurs de chaleur peuvent être reliés, sur la deuxième surface, à un dispositif de chauffage ou de refroidissement.

11. Utilisation d'une plaque selon l'une des revendications 1 à 9 pour envelopper au moins partiellement une pièce intérieure ; dans laquelle les éléments conducteurs de chaleur sont prévus pour le transport d'énergie thermique entre la pièce intérieure et un dispositif de chauffage ou de refroidissement sur la face tournant le dos à la pièce.
